(19) Europäisches Patentamt
European Patent Office
Office européen des brevets

(11) EP 3 605 168 A1

(12) **EUROPEAN PATENT APPLICATION**
published in accordance with Art. 153(4) EPC

(43) Date of publication:
**05.02.2020 Bulletin 2020/06**

(21) Application number: **18771901.8**

(22) Date of filing: **08.03.2018**

(51) Int Cl.:
***G02B 5/30*** *(2006.01)*

(86) International application number:
**PCT/JP2018/009006**

(87) International publication number:
**WO 2018/173773 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2017 JP 2017060159**

(71) Applicant: **Zeon Corporation**
**Tokyo 100-8246 (JP)**

(72) Inventors:
- **FUJIWARA, Natsumi**
  **Tokyo 100-8246 (JP)**
- **NAKAJIMA, Shunpei**
  **Tokyo 100-8246 (JP)**
- **IKEDA, Akira**
  **Tokyo 100-8246 (JP)**

(74) Representative: **Hansen, Norbert**
**Maiwald Patentanwalts- und Rechtsanwaltsgesellschaft mbH**
**Elisenhof**
**Elisenstraße 3**
**80335 München (DE)**

(54) **LIQUID CRYSTAL CURED FILM AND METHOD FOR MANUFACTURING SAME**

(57) A method for producing a liquid crystal cured film including a liquid crystal cured layer formed of a cured product of a liquid crystal composition including a liquid crystal compound capable of expressing a birefringence with reverse wavelength distribution and a polymerization initiator, the method including: a step of forming a layer of the liquid crystal composition; a step of giving orientation to the liquid crystal compound contained in the layer of the liquid crystal composition; and a step of curing the layer of the liquid crystal composition, wherein a residue content viscosity of a test composition is 800 cP or less under a condition of a temperature that is the same as a temperature of the layer in the step of giving orientation to the liquid crystal compound, the test composition being the liquid crystal composition from which the polymerization initiator is omitted.

FIG.1

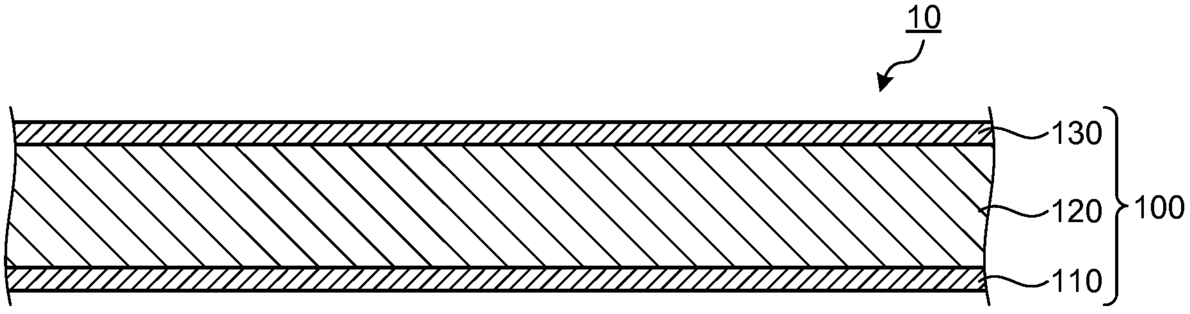


EP 3 605 168 A1

## Description

### Field

The present invention relates to a liquid crystal cured film and a method for producing the same.

### Background

There has been known in prior art a film which includes a liquid crystal cured layer obtained by curing a film of a liquid crystal composition containing a liquid crystal compound. In such a film, the molecules of the liquid crystal compound have been usually uniformly oriented, and the tilt angles formed between the molecules of the liquid crystal compound and the layer plane have been constant in the thickness direction.

However, in recent years, development is underway on a technology which utilizes a specific liquid crystal composition for rendering the tilt angles of the molecules of the liquid crystal compound in the liquid crystal cured layer being non-uniform in the thickness direction (see Patent Literatures 1 to 3).

### Citation List

### Patent Literature

Patent Literature 1: Japanese Patent Publication No. 5363022 B
Patent Literature 2: Japanese Patent Application Laid-Open No. 2015-161714 A
Patent Literature 3: Japanese Patent Application Laid-Open No. 2016-110153 A

### Summary

### Technical Problem

In the liquid crystal cured layer obtained by the technologies according to Patent Literatures 1 to 3, the tilt angles of the molecules of the liquid crystal compound have been, in general, continuously different in the thickness direction of the liquid crystal cured layer. Specifically, in the prior-art liquid crystal cured layers, the tilt angle has been usually smaller as it is closer to one side of the liquid crystal cured layer, and larger as it is closer to the other side. Therefore, there has not been known in prior art a liquid crystal cured layer in which the tilt angles of the molecules of the liquid crystal compound are discontinuously different in the thickness direction.

Liquid crystal cured layers are expected to be used in optical applications such as a viewing angle compensation film for liquid crystal display devices. However, in optical applications, there is a demand for the development of a liquid crystal cured layer having a different structure from the prior-art structures in order to enable a large variety of optical designs. Particularly, there is a demand for a layer having a novel structure as a liquid crystal cured layer having a retardation with reverse wavelength distribution.

The present invention has been devised in view of the aforementioned problem. An object of the present invention is to provide: a liquid crystal cured film including a liquid crystal cured layer having a retardation with reverse wavelength distribution in which tilt angles of molecules of a liquid crystal compound are discontinuously different in a thickness direction, as well as a method for producing the same.

### Solution to Problem

The present inventors extensively conducted research for solving the aforementioned problem. As a result, the present inventors have found that the aforementioned problem can be solved by giving an orientation treatment with a temperature condition to a layer of a liquid crystal composition including a liquid crystal compound capable of expressing a birefringence with reverse wavelength distribution, and a polymerization initiator, wherein the temperature condition is a condition under which a test composition shows a specific residue content viscosity, the test composition being the liquid crystal composition from which the polymerization initiator is omitted. Based on such findings, the present inventors accomplished the present invention.

That is, the present invention includes the following:

<1> A method for producing a liquid crystal cured film including a liquid crystal cured layer formed of a cured product

of a liquid crystal composition including a liquid crystal compound capable of expressing a birefringence with reverse wavelength distribution and a polymerization initiator, the method comprising:

a step of forming a layer of the liquid crystal composition;
a step of giving orientation to the liquid crystal compound contained in the layer of the liquid crystal composition; and
a step of curing the layer of the liquid crystal composition, wherein
a residue content viscosity of a test composition is 800 cP or less under a condition of a temperature that is the same as a temperature of the layer in the step of giving orientation to the liquid crystal compound, the test composition being the liquid crystal composition from which the polymerization initiator is omitted.

<2> The method for producing a liquid crystal cured film according to <1>, wherein the liquid crystal composition includes a surfactant containing a fluorine atom.
<3> The method for producing a liquid crystal cured film according to <2>, wherein a 1-octanol/water partition coefficient of the surfactant is 3.5 or more and 6.7 or less.
<4> The method for producing a liquid crystal cured film according to <2> or <3>, wherein an amount of the surfactant relative to 100 parts by weight of the liquid crystal compound is 0.10 part by weight or more and 0.50 part by weight or less.
<5> A liquid crystal cured film comprising a liquid crystal cured layer formed of a cured product of a liquid crystal composition including a liquid crystal compound capable of expressing a birefringence with reverse wavelength distribution,
the liquid crystal cured layer includes a first layer, a second layer, and a third layer which are disposed in this order and contain the liquid crystal compound which may be in a fixed orientation state,
first tilt angle formed by molecules of the liquid crystal compound contained in the first layer relative to a layer plane is constant in the first layer,
second tilt angle formed by molecules of the liquid crystal compound contained in the second layer relative to a layer plane is constant in the second layer,
the second tilt angle is discontinuously different from the first tilt angle,
third tilt angle formed by molecules of the liquid crystal compound contained in the third layer relative to a layer plane is constant in the third layer, and
the third tilt angle is discontinuously different from the first tilt angle and the second tilt angle.
<6> The liquid crystal cured film according to <5>, wherein
a ratio in thickness of the first layer relative to a total thickness 100% of the first layer, the second layer, and the third layer is 14% or more and 66% or less,
a ratio in thickness of the second layer relative to the total thickness 100% of the first layer, the second layer, and the third layer is 1% or more and 80% or less, and
a ratio in thickness of the third layer relative to the total thickness 100% of the first layer, the second layer, and the third layer is 6% or more and 33% or less.
<7> The liquid crystal cured film according to <5> or <6>, wherein
the first tilt angle is 0° or more and 20° or less,
the second tilt angle is 20° or more and 70° or less, and
the third tilt angle is 70° or more and 90° or less.

Advantageous Effects of Invention

According to the present invention, there can be provided a liquid crystal cured film including a liquid crystal cured layer having a retardation with reverse wavelength distribution in which tilt angles of molecules of a liquid crystal compound are discontinuously different in a thickness direction, as well as a method for producing the same.

Brief Description of Drawings

FIG. 1 is a cross-sectional view schematically illustrating a cross section of a liquid crystal cured film according to an embodiment of the present invention, cut along a plane parallel to the thickness direction thereof.
FIG. 2 is a photograph of the cross section of the liquid crystal cured layer observed through a polarization microscope in Example 4 of the present invention.
FIG. 3 is an illustrative view explaining each portion in FIG. 2.

Description of Embodiments

Hereinafter, the present invention will be described in detail with reference to examples and embodiments. However, the present invention is not limited to the following examples and embodiments and may be freely modified for implementation without departing from the scope of claims of the present invention and the scope of their equivalents.

In the following description, the terms "polarizing plate" and "wave plate" encompass a film and sheet having flexibility such as a resin film, unless otherwise specified.

In the following description, a resin having a positive intrinsic birefringence value means a resin in which the refractive index in a stretched direction is larger than the refractive index in a direction orthogonal to the stretched direction. A resin having a negative intrinsic birefringence value means a resin in which the refractive index in a stretched direction is smaller than the refractive index in a direction orthogonal to the stretched direction. The intrinsic birefringence value may be calculated from a permittivity distribution.

In the following description, a retardation of a certain layer represents an in-plane retardation Re, unless otherwise specified. This in-plane retardation Re is a value represented by Re = (nx - ny) $\times$ d, unless otherwise specified. Herein, nx represents a refractive index in a direction in which the maximum refractive index is given among directions perpendicular to the thickness direction of the layer (in-plane directions), ny represents a refractive index in a direction, among the above-mentioned in-plane directions of the layer, perpendicular to the direction giving nx, and d represents the thickness of the layer. The measurement wavelength of a retardation is 590 nm, unless otherwise specified.

In the following description, a slow axis direction of a certain layer indicates a direction of the slow axis in an in-plane direction, unless otherwise specified.

In the following description, a direction of an element being "parallel" or "perpendicular" may allow an error within the range of not impairing the advantageous effects of the present invention unless otherwise specified, for example, within a range of $\pm$5°, preferably $\pm$3°, and more preferably $\pm$1°.

In the following description, a "tilt angle" of a molecule of a liquid crystal compound contained in a certain layer represents an angle formed by the molecule of the liquid crystal compound relative to the layer plane, unless otherwise specified. This tilt angle corresponds to the largest angle among angles formed by the directions of the largest refractive indices in the refractive index ellipsoid of the molecule of the liquid crystal compound relative to the layer plane.

[1. Summary of method for producing liquid crystal cured film]

In the method for producing the liquid crystal cured film according to the present invention, there is produced a liquid crystal cured film including a liquid crystal cured layer formed of a cured product of a liquid crystal composition which contains a liquid crystal compound capable of expressing a birefringence with reverse wavelength distribution and a polymerization initiator. In the following description, the liquid crystal compound capable of expressing a birefringence with reverse wavelength distribution is sometimes appropriately referred to as a "reverse distribution liquid crystal compound". This production method includes:

(i) a step of forming a layer of a liquid crystal composition;
(ii) a step of giving orientation to a liquid crystal compound contained in the layer of the liquid crystal composition; and
(iii) a step of curing the layer of the liquid crystal composition.

In the aforementioned production method, the step of giving orientation to a liquid crystal compound is performed such that the temperature condition of the layer of the liquid crystal composition in the step of giving orientation to the liquid crystal compound becomes the same as a temperature condition under which the residue content viscosity of a test composition usually becomes 800 cP or less. The aforementioned test composition refers to a composition having a constituent composition that is identical with that of the liquid crystal composition except that the polymerization initiator is omitted therefrom. The residue content viscosity of the test composition refers to the viscosity of the residual component of the test composition under a condition of a temperature that is the same as the temperature of the layer of the liquid crystal composition in the step of giving orientation to the liquid crystal compound. The residual component of the test composition refers to a component which has not volatilized and remains under the condition of the temperature that is the same as the temperature of the layer of the liquid crystal composition in the step of giving orientation to the liquid crystal compound, among the components contained in the test composition. According to this production method, there can be obtained a liquid crystal cured film including a liquid crystal cured layer in which tilt angles of molecules of a liquid crystal compound such as a reverse distribution liquid crystal compound are discontinuously different in a thickness direction, and the liquid crystal cured layer has a retardation with reverse wavelength distribution.

[2. Reverse distribution liquid crystal compound]

The reverse distribution liquid crystal compound is a compound having liquid crystal properties, and is usually a compound which is capable of exhibiting a liquid crystal phase when the reverse distribution liquid crystal compound is oriented.

Also, as previously described, the reverse distribution liquid crystal compound is a liquid crystal compound capable of expressing a birefringence with reverse wavelength distribution. Herein, the liquid crystal compound capable of expressing a birefringence with reverse wavelength distribution refers to a liquid crystal compound that expresses a birefringence with reverse wavelength distribution when a layer of the liquid crystal compound is formed and the liquid crystal compound is oriented therein. Whether or not the liquid crystal compound expresses a birefringence with reverse wavelength distribution can usually be confirmed by checking whether or not the layer of the liquid crystal compound exhibits a birefringence with reverse wavelength distribution when the liquid crystal compound is homogeneously oriented. Herein, that the liquid crystal compound is homogeneously oriented refers to that a layer containing the liquid crystal compound is formed, and the major axis directions of the mesogen skeletons of the molecules of the liquid crystal compound in the layer are oriented in a certain direction which is parallel to the plane of the layer. When the liquid crystal compound contains multiple types of mesogen skeletons having different orientation directions, the orientation direction of the longest type of mesogen is regarded as the aforementioned orientation direction.

The birefringence with reverse wavelength distribution refers to a birefringence in which a birefringence Δn(450) at a wavelength of 450 nm and a birefringence Δn(550) at a wavelength of 550 nm satisfy the following formula (N1). As to the liquid crystal compound capable of expressing a birefringence with reverse wavelength distribution, the longer the measurement wavelength, the larger the birefringence the compound can usually express.

$$\Delta n(450) < \Delta n(550) \quad (N1)$$

The reverse distribution liquid crystal compound may be a compound containing, in a molecule of the reverse distribution liquid crystal compound, a main chain mesogen and a side chain mesogen bound to the main chain mesogen. In the aforementioned reverse distribution liquid crystal compound containing a main chain mesogen and a side chain mesogen, the side chain mesogen can be oriented in a direction different from the main chain mesogen in a state in which the reverse distribution liquid crystal compound is oriented. Therefore, in a layer of the reverse distribution liquid crystal compound oriented in this manner, the main chain mesogen and the side chain mesogen can be oriented in different directions. In such a case, the birefringence of the layer is expressed as a difference between the refractive index corresponding to a main chain mesogen and the refractive index corresponding to a side chain mesogen, with the result that a birefringence with reverse wavelength distribution can be expressed.

It is preferable that the reverse distribution liquid crystal compound has a polymerizability. Therefore, it is preferable that the molecules of the reverse distribution liquid crystal compound contain a polymerizable group such as an acryloyl group, a methacryloyl group, and an epoxy group. The reverse distribution liquid crystal compound having a polymerizability property can be polymerized in a state of exhibiting a liquid crystal phase, and can become a polymer while maintaining the orientation state of the molecules in the liquid crystal phase. Therefore, the orientation state of the reverse distribution liquid crystal compound can be fixed in the liquid crystal cured layer, and the polymerization degree of the liquid crystal compound can be increased for enhancing the mechanical strength of the liquid crystal cured layer.

The molecular weight of the reverse distribution liquid crystal compound is preferably 300 or more, more preferably 500 or more, and particularly preferably 800 or more, and is preferably 2000 or less, more preferably 1700 or less, and particularly preferably 1500 or less. When the reverse distribution liquid crystal compound having a molecular weight falling within such a range is used, a coating property of the liquid crystal composition can be particularly made favorable.

The refractive index anisotropy Δn of the reverse distribution liquid crystal compound at a measurement wavelength of 590 nm is preferably 0.01 or more, and more preferably 0.03 or more, and is preferably 0.15 or less, and more preferably 0.10 or less. When the reverse distribution liquid crystal compound having a refractive index anisotropy Δn falling within such a range is used, there can be easily obtained a liquid crystal cured layer having a retardation with reverse wavelength distribution in which the tilt angles of the molecules of the liquid crystal compound are discontinuously different in the thickness direction. Usually, when the reverse distribution liquid crystal compound having a refractive index anisotropy Δn falling within such a range is used, a liquid crystal cured layer with reduced degree of orientation defects can be easily obtained.

The refractive index anisotropy of the liquid crystal compound may be measured by, for example, the following method.

A film of the liquid crystal compound is produced, and the liquid crystal compound contained in the film is

homogeneously oriented. After that, the retardation of the film is measured. Then, the refractive index anisotropy of the liquid crystal compound may be calculated by "(film in-plane retardation)/(film thickness)". For facilitating the measurement of the retardation and optical thickness, the film of the homogeneously oriented liquid crystal compound may be cured.

As the reverse distribution liquid crystal compound, one type thereof may be solely used, and two or more types thereof may also be used in combination at any ratio.

Examples of the reverse distribution liquid crystal compound may include a compound represented by the following formula (Ia). In the following description, the compound represented by the formula (Ia) is sometimes appropriately referred to as a "compound (Ia)".

$$Z^{1a}-Y^{7a}-G^{1a}-Y^{5a}-A^{4a}\left(Y^{3a}-A^{2a}\right)_k-Y^{1a}-A^{1a}-Y^{2a}\left(A^{3a}-Y^{4a}\right)_l-A^{5a}-Y^{6a}-G^{2a}-Y^{8a}-Z^{2a}$$

(Ia)

In the formula (Ia) described above, $A^{1a}$ represents an aromatic hydrocarbon ring group having as a substituent an organic group of 1 to 67 carbon atoms that has at least one aromatic ring selected from the group consisting of an aromatic hydrocarbon ring and an aromatic heterocycle; or an aromatic heterocycle group having as a substituent an organic group of 1 to 67 carbon atoms that has at least one aromatic ring selected from the group consisting of an aromatic hydrocarbon ring and an aromatic heterocycle.

Specific examples of $A^{1a}$ may include a phenylene group substituted with a group represented by a formula:-$C(R^f)=N-N(R^g)R^h$ or a formula: -$C(R^f)=N-N=C(R^{f1})R^h$; a benzothiazol-4,7-diyl group substituted with a 1-benzofuran-2-yl group; a benzothiazol-4,7-diyl group substituted with a 5-(2-butyl)-1-benzofuran-2-yl group; a benzothiazol-4,7-diyl group substituted with a 4,6-dimethyl-1-benzofuran-2-yl group; a benzothiazol-4,7-diyl group substituted with a 6-methyl-1-benzofuran-2-yl group; a benzothiazol-4,7-diyl group substituted with a 4,6,7-trimethyl-1-benzofuran-2-yl group; a benzothiazol-4,7-diyl group substituted with a 4,5,6-trimethyl-1-benzofuran-2-yl group; a benzothiazol-4,7-diyl group substituted with a 5-methyl-1-benzofuran-2-yl group; a benzothiazol-4,7-diyl group substituted with a 5-propyl-1-benzofuran-2-yl group; a benzothiazol-4,7-diyl group substituted with a 7-propyl-1-benzofuran-2-yl group; a benzothiazol-4,7-diyl group substituted with a 5-fluoro-1-benzofuran-2-yl group; a benzothiazol-4,7-diyl group substituted with a phenyl group; a benzothiazol-4,7-diyl group substituted with a 4-fluorophenyl group; a benzothiazol-4,7-diyl group substituted with a 4-nitrophenyl group; a benzothiazol-4,7-diyl group substituted with a 4-trifluoromethylphenyl group; a benzothiazol-4,7-diyl group substituted with a 4-cyanophenyl group; a benzothiazol-4,7-diyl group substituted with a 4-methansulfonylphenyl group; a benzothiazol-4,7-diyl group substituted with a thiophen-2-yl group; a benzothiazol-4,7-diyl group substituted with a thiophen-3-yl group; a benzothiazol-4,7-diyl group substituted with a 5-methlthiophen-2-yl group; a benzothiazol-4,7-diyl group substituted with a 5-chlorothiophen-2-yl group; a benzothiazol-4,7-diyl group substituted with a thieno[3,2-b]thiophen-2-yl group; a benzothiazol-4,7-diyl group substituted with a 2-benzothiazoryl group; a benzothiazol-4,7-diyl group substituted with a 4-biphenyl group; a benzothiazol-4,7-diyl group substituted with a 4-propylbiphenyl group; a benzothiazol-4,7-diyl group substituted with a 4-thiazolyl group; a benzothiazol-4,7-diyl group substituted with a 1-phenylethylen-2-yl group; a benzothiazol-4,7-diyl group substituted with a 4-pyridyl group; a benzothiazol-4,7-diyl group substituted with a 2-furyl group; a benzothiazol-4,7-diyl group substituted with a naphtho[1,2-b]furan-2-yl group; a 1H-isoindole-1,3(2H)-dione-4,7-diyl group substituted with a 5-methoxy-2-benzothiazolyl group; a 1H-isoindole-1,3(2H)-dione-4,7-diyl group substituted with a phenyl group; a 1H-isoindole-1,3(2H)-dione-4,7-diyl group substituted with a 4-nitrophenyl group; and a 1H-isoindole-1,3(2H)-dione-4,7-diyl group substituted with a 2-thiazolyl group. Herein, $R^f$ and $R^{f1}$ are each independently represent the same meaning as that of $Q^1$ described later. $R^g$ represents the same meaning as that of $A^y$ described later. $R^h$ represents the same meaning as that of $A^x$ described later.

In the aforementioned formula (Ia), $Y^{1a}$ to $Y^{8a}$ each independently represent a chemical single bond, -O-,-S-, -O-C(=O)-, -C(=O)-O-, -O-C(=O)-O-, $NR^1$-C(=O)-, -C(=O)-$NR^1$-, -O-C(=O)-$NR^1$-, -$NR^1$-C(=O)-O-, -$NR^1$-C(=O)-$NR^1$-, -O-$NR^1$-, or -$NR^1$-O-. Herein, $R^1$ represents a hydrogen atom or an alkyl group of 1 to 6 carbon atoms.

In the aforementioned formula (Ia), $G^{1a}$ and $G^{2a}$ each independently represent a divalent aliphatic group of 1 to 20 carbon atoms optionally having a substituent. In the aliphatic group, one or more of -O-, -S-, -O-C(=O)-,-C(=O)-O-, -O-C(=O)-O-, -$NR^2$-C(=O)-, -C(=O)-$NR^2$, -$NR^2$-, or-C(=O)- may be interposed per one aliphatic group, with a proviso that cases where 2 or more of -O- or -S- are adjacently interposed therein are excluded. Herein, $R^2$ represents a hydrogen atom or an alkyl group of 1 to 6 carbon atoms.

In the aforementioned formula (Ia), $Z^{1a}$ and $Z^{2a}$ each independently represent an alkenyl group of 2 to 20 carbon atoms optionally substituted with a halogen atom.

In the aforementioned formula (Ia), $A^{2a}$ and $A^{3a}$ each independently represent a divalent alicyclic hydrocarbon group of 3 to 30 carbon atoms optionally having a substituent.

In the aforementioned formula (Ia), $A^{4a}$ and $A^{5a}$ each independently represent a divalent aromatic group of 6 to 30 carbon atoms optionally having a substituent.

In the aforementioned formula (Ia), k and 1 each independently represent 0 or 1.

Among them, preferable examples thereof may include a compound represented by the following formula (I). In the following description, the compound represented by the formula (I) may be appropriately referred to as "compound (I)".

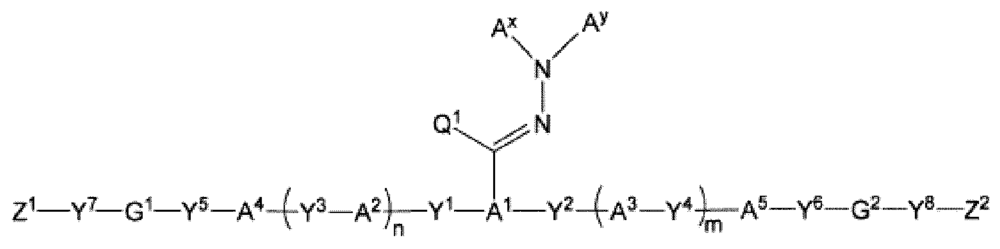

(I)

As shown in the following formula, the compound (I) usually includes two mesogen skeletons that are a main chain mesogen 1a composed of a group $-Y^5-A^4-(Y^3-A^2)_n-Y^1-A^1-Y^2-(A^3-Y^4)_m-A^5-Y^6-$ and a side chain mesogen 1b composed of a group $>A^1-C(Q^1)=N-N(A^x)A^y$. The main chain mesogen 1a and the side chain mesogen 1b cross each other. Although the aforementioned main chain mesogen 1a and side chain mesogen 1b may be collectively regarded as one mesogen, in the present invention these are described as two separate mesogens.

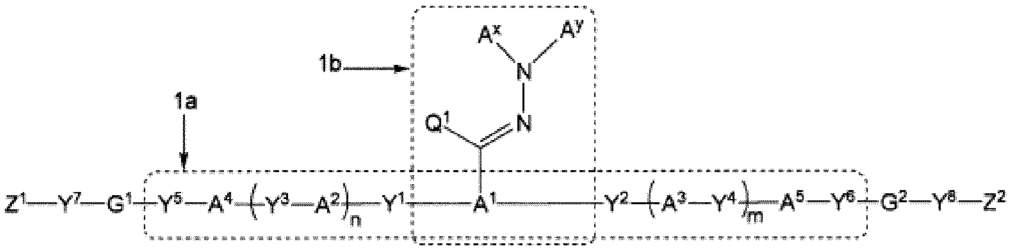


The refractive index of the main chain mesogen 1a in the long-axis direction is denoted by n1, and the refractive index of the side chain mesogen 1b in the long-axis direction is denoted by n2. In this case, the absolute value and wavelength distribution of the refractive index n1 usually depend on the molecular structure of the main chain mesogen 1a. The absolute value and wavelength distribution of the refractive index n2 usually depend on the molecular structure of the side chain mesogen 1b. Herein, the molecule of the liquid crystal compound is subjected to rotational motion around the long-axis direction of the main chain mesogen 1a as a rotational axis in the liquid crystal phase. Therefore, the refractive indices n1 and n2 herein represent the refractive index of a rotating body.

Due to the molecular structures of the main chain mesogen 1a and the side chain mesogen 1b, the absolute value of the refractive index n1 is larger than the absolute value of the refractive index n2. Further, the refractive indices n1 and n2 usually exhibit forward wavelength distribution. A refractive index with forward wavelength distribution herein means a refractive index of which the absolute value becomes smaller as the measurement wavelength is longer. The refractive index n1 of the main chain mesogen 1a exhibits small forward wavelength distribution. Therefore, although the refractive index n1 measured at a long wavelength is smaller than the refractive index n1 measured at a short wavelength, the difference thereof is small. In contrast, the refractive index n2 of the side chain mesogen 1b exhibits large forward wavelength distribution. Therefore, the refractive index n2 measured at a long wavelength is smaller than the refractive index n2 measured at a short wavelength, and the difference thereof is large. Consequently, the difference $\Delta n$ between the refractive index n1 and the refractive index n2 is small at the short measurement wavelength, and the difference $\Delta n$ between the refractive index n1 and the refractive index n2 is large at the long measurement wavelength. Accordingly, the birefringence with reverse wavelength distribution can be expressed on the basis of the main chain mesogen 1a and the side chain mesogen 1b.

In the formula (I) mentioned above, $Y^1$ to $Y^8$ are each independently a chemical single bond, -O-, -S-, -O-C(=O)-, -C(=O)-O-, -O-C(=O)-O-, $-NR^1-C(=O)-$, $-C(=O)-NR^1-$,$-O-C(=O)-NR^1-$, $-NR^1-C(=O)-O-$, $-NR^1-C(=O)-NR^1-$, $-O-NR^1-$, or$-NR^1-O-$.

Herein, $R^1$ is a hydrogen atom or an alkyl group of 1 to 6 carbon atoms.

Examples of the alkyl group of 1 to 6 carbon atoms of $R^1$ may include a methyl group, an ethyl group, a n-propyl group, an isopropyl group, a n-butyl group, a sec-butyl group, a t-butyl group, a n-pentyl group, and a n-hexyl group.

It is preferable that $R^1$ is a hydrogen atom or an alkyl group of 1 to 4 carbon atoms.

In the compound (I), it is preferable that $Y^1$ to $Y^8$ are each independently a chemical single bond, -O-, -O-C(=O)-, -C(=O)-O-, or -O-C(=O)-O-.

In the formula (I) mentioned above, $G^1$ and $G^2$ are each independently a divalent aliphatic group of 1 to 20 carbon atoms optionally having a substituent.

Examples of the divalent aliphatic group of 1 to 20 carbon atoms may include a divalent aliphatic group having a linear structure, such as an alkylene group of 1 to 20 carbon atoms and an alkenylene group of 2 to 20 carbon atoms; and a divalent aliphatic group, such as a cycloalkanediyl group of 3 to 20 carbon atoms, a cycloalkenediyl group of 4 to 20 carbon atoms, and a divalent alicyclic fused ring group of 10 to 30 carbon atoms.

Examples of the substituent in the divalent aliphatic group of $G^1$ and $G^2$ may include a halogen atom, such as a fluorine atom, a chlorine atom, a bromine atom, and an iodine atom; and an alkoxy group of 1 to 6 carbon atoms, such as a methoxy group, an ethoxy group, a n-propoxy group, an isopropoxy group, a n-butoxy group, a sec-butoxy group, a t-butoxy group, a n-pentyloxy group, and a n-hexyloxy group. Among these, a fluorine atom, a methoxy group, and an ethoxy group are preferable.

The aforementioned aliphatic groups may have one or more per one aliphatic group of -O-, -S-, -O-C(=O)-,-C(=O)-O-, -O-C(=O)-O-, $-NR^2$-C(=O)-, -C(=O)-$NR^2$-, $-NR^2$-, or-C(=O)- inserted therein. However, cases where two or more -O- or -S- are adjacently inserted are excluded. Herein, $R^2$ is a hydrogen atom or an alkyl group of 1 to 6 carbon atoms. It is preferable that $R^2$ is a hydrogen atom or a methyl group.

It is preferable that the group inserted into the aliphatic groups is -O-, -O-C(=O)-, -C(=O)-O-, or -C(=O)-.

Specific examples of the aliphatic groups into which the group is inserted may include $-CH_2-CH_2-O-CH_2-CH_2-$, $-CH_2-CH_2-S-CH_2-CH_2-$, $-CH_2-CH_2-O-C(=O)-CH_2-CH_2-$, $-CH_2-CH_2-C(=O)-O-CH_2-CH_2-$, $-CH_2-CH_2-C(=O)-O-CH_2-$, $-CH_2-O-C(=O)-O-CH_2-CH_2-$, $-CH_2-CH_2-NR^2-C(=O)-CH_2-CH_2-$, $-CH_2-CH_2-C(=O)-NR^2-CH_2-$,$-CH_2-NR^2-CH_2-CH_2-$, and $-CH_2-C(=O)-CH_2-$.

Among these, from the viewpoint of more favorably expressing the desired effect of the present invention, $G^1$ and $G^2$ are each independently preferably a divalent aliphatic group having a linear structure, such as an alkylene group of 1 to 20 carbon atoms and an alkenylene group of 2 to 20 carbon atoms, more preferably an alkylene group of 1 to 12 carbon atoms, such as a methylene group, an ethylene group, a trimethylene group, a propylene group, a tetramethylene group, a pentamethylene group, a hexamethylene group, an octamethylene group, and a decamethylene group [$-(CH_2)_{10}-$], and particularly preferably a tetramethylene group [$-(CH_2)_4-$], a hexamethylene group [$-(CH_2)_6-$], an octamethylene group [$-(CH_2)_8-$], or a decamethylene group [$-(CH_2)_{10}-$].

In the formula (I) mentioned above, $Z^1$ and $Z^2$ are each independently an alkenyl group of 2 to 10 carbon atoms that may be substituted by a halogen atom.

It is preferable that the number of carbon atoms in the alkenyl group is 2 to 6. Examples of the halogen atom that is a substituent in the alkenyl group of $Z^1$ and $Z^2$ may include a fluorine atom, a chlorine atom, and a bromine atom. A chlorine atom is preferable.

Specific examples of the alkenyl group of 2 to 10 carbon atoms of $Z^1$ and $Z^2$ may include $CH_2=CH-$, $CH_2=C(CH_3)-$, $CH_2=CH-CH_2-$, $CH_3-CH=CH-$, $CH_2=CH-CH_2-CH_2-$, $CH_2=C(CH_3)-CH_2-CH_2-$, $(CH_3)_2C=CH-CH_2-$, $(CH_3)_2C=CH-CH_2-CH_2-$, $CH_2=C(Cl)-$, $CH_2=C(CH_3)-CH_2-$, and $CH_3-CH=CH-CH_2-$.

Among these, from the viewpoint of favorably expressing the desired effect of the present invention, $Z^1$ and $Z^2$ are each independently preferably $CH_2=CH-$, $CH_2=C(CH_3)-$, $CH_2=C(Cl)-$, $CH_2=CH-CH_2-$, $CH_2=C(CH_3)-CH_2-$, or $CH_2=C(CH_3)-CH_2-CH_2-$, more preferably $CH_2=CH-$, $CH_2=C(CH_3)-$ or $CH_2=C(Cl)-$, and particularly preferably $CH_2=CH-$.

In the formula (I) mentioned above, $A^x$ is an organic group of 2 to 30 carbon atoms having at least one aromatic ring selected from the group consisting of an aromatic hydrocarbon ring and an aromatic heterocyclic ring. The "aromatic ring" means a cyclic structure having aromaticity in the broad sense based on Huckel rule, that is, a cyclic conjugated structure having (4n+2) $\pi$ electrons, and a cyclic structure that exhibits aromaticity by involving a lone pair of electrons of a heteroatom, such as sulfur, oxygen, and nitrogen, in a $\pi$ electron system, typified by thiophene, furan, and benzothiazole.

The organic group of 2 to 30 carbon atoms having at least one aromatic ring selected from the group consisting of an aromatic hydrocarbon ring and an aromatic heterocyclic ring, of $A^x$, may have a plurality of aromatic rings, or have both an aromatic hydrocarbon ring and an aromatic heterocyclic ring.

Examples of the aromatic hydrocarbon ring may include a benzene ring, a naphthalene ring, and an anthracene ring. Examples of the aromatic heterocyclic ring may include a monocyclic aromatic heterocyclic ring, such as a pyrrole ring, a furan ring, a thiophene ring, a pyridine ring, a pyridazine ring, a pyrimidine ring, a pyrazine ring, a pyrazole ring, an imidazole ring, an oxazole ring, and a thiazole ring; and a fused aromatic heterocyclic ring, such as a benzothiazole ring, a benzoxazole ring, a quinoline ring, a phthalazine ring, a benzimidazole ring, a benzopyrazole ring, a benzofuran ring, a benzothiophene ring, a thiazolopyridine ring, an oxazolopyridine ring, a thiazolopyrazine ring, an oxazolopyrazine

ring, a thiazolopyridazine ring, an oxazolopyridazine ring, a thiazolopyrimidine ring, and an oxazolopyrimidine ring.

The aromatic ring of $A^x$ may have a substituent. Examples of the substituent may include a halogen atom, such as a fluorine atom and a chlorine atom; a cyano group; an alkyl group of 1 to 6 carbon atoms, such as a methyl group, an ethyl group, and a propyl group; an alkenyl group of 2 to 6 carbon atoms, such as a vinyl group and an allyl group; a halogenated alkyl group of 1 to 6 carbon atoms, such as a trifluoromethyl group; a substituted amino group, such as a dimethylamino group; an alkoxy group of 1 to 6 carbon atoms, such as a methoxy group, an ethoxy group, and an isopropoxy group; a nitro group; an aryl group, such as a phenyl group and a naphthyl group; $-C(=O)-R^5$; $-C(=O)-OR^5$; and $-SO_2R^6$. Herein, $R^5$ is an alkyl group of 1 to 20 carbon atoms, an alkenyl group of 2 to 20 carbon atoms, or a cycloalkyl group of 3 to 12 carbon atoms. $R^6$ is an alkyl group of 1 to 20 carbon atoms, an alkenyl group of 2 to 20 carbon atoms, a phenyl group, or a 4-methylphenyl group, which are the same as those for $R^4$ which will be described later.

The aromatic ring of $A^x$ may have a plurality of substituents that may be the same or different, and two adjacent substituents may be bonded together to form a ring. The formed ring may be a monocycle or a fused polycycle, and may be an unsaturated ring or a saturated ring.

The "number of carbon atoms" in the organic group of 2 to 30 carbon atoms of $A^x$ means the total number of carbon atoms in the entire organic group which excludes carbon atoms in the substituents (the same applies to $A^y$ which will be described later).

Examples of the organic group of 2 to 30 carbon atoms having at least one aromatic ring selected from the group consisting of an aromatic hydrocarbon ring and an aromatic heterocyclic ring, of $A^x$, may include an aromatic hydrocarbon ring group; an aromatic heterocyclic group; a group having a combination of an aromatic hydrocarbon ring and a heterocyclic ring; an alkyl group of 3 to 30 carbon atoms having at least one aromatic ring selected from the group consisting of an aromatic hydrocarbon ring and an aromatic heterocyclic ring; an alkenyl group of 4 to 30 carbon atoms having at least one aromatic ring selected from the group consisting of an aromatic hydrocarbon ring and an aromatic heterocyclic ring; and an alkynyl group of 4 to 30 carbon atoms having at least one aromatic ring selected from the group consisting of an aromatic hydrocarbon ring and an aromatic heterocyclic ring.

Preferable specific examples of $A^x$ are as follows. However, $A^x$ is not limited to the following examples. In the following formulae, "-" represents an atomic bonding at any position of the ring (the same applies to the following).

(1) An aromatic hydrocarbon ring group

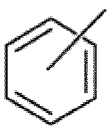
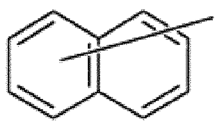
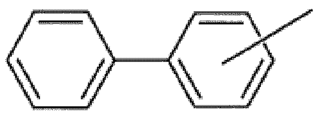

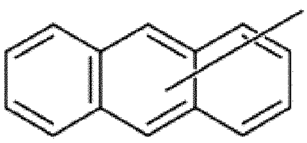
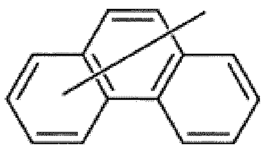
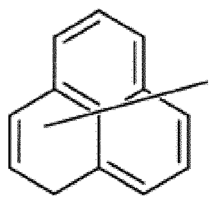

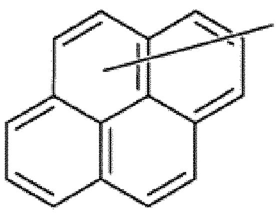
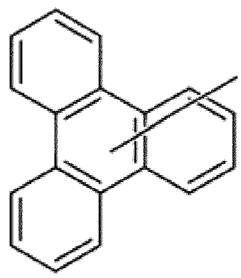
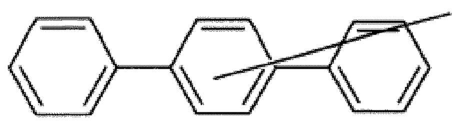

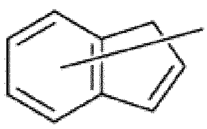
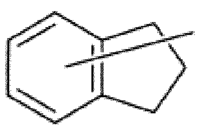
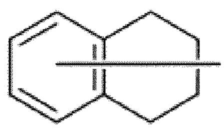

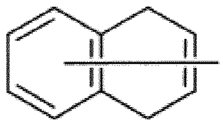
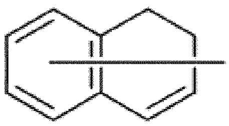
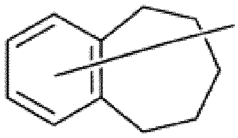

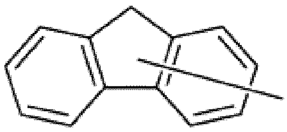
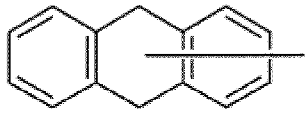

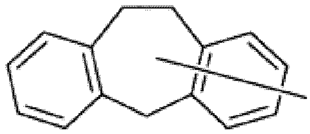
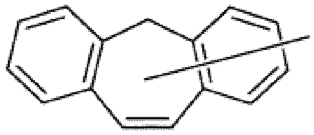

(2) An aromatic heterocyclic group

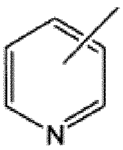
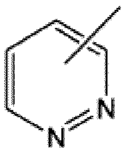
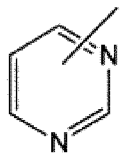
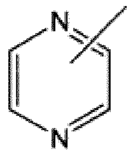

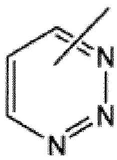
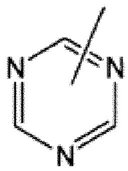
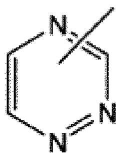

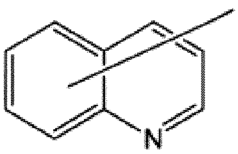
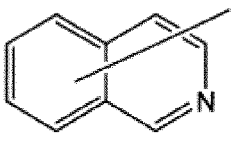
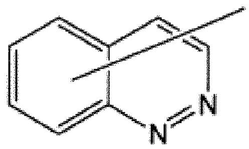

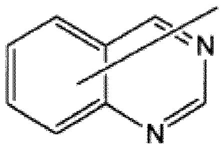
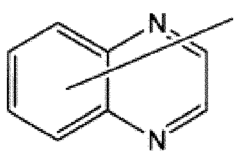
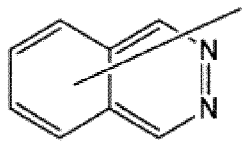

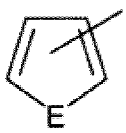
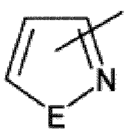
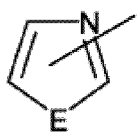

In the aforementioned formulae, E is $NR^{6a}$, an oxygen atom, or a sulfur atom. Herein, $R^{6a}$ is a hydrogen atom; or an alkyl group of 1 to 6 carbon atoms, such as a methyl group, an ethyl group, and a propyl group.

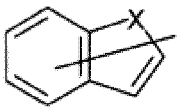 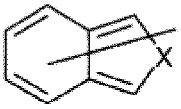 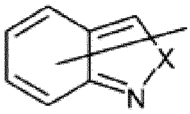 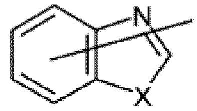 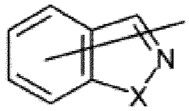

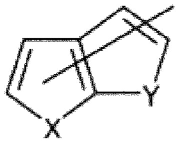 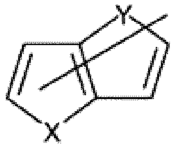 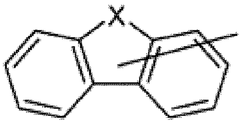 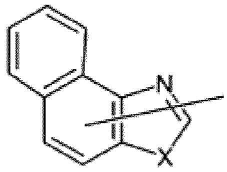

In the aforementioned formulae, X and Y are each independently $NR^7$, an oxygen atom, a sulfur atom, -SO-, or $-SO_2-$ (with a proviso that cases where an oxygen atom, a sulfur atom, -SO-, and $-SO_2-$ are each adjacent are excluded). $R^7$ is a hydrogen atom, or an alkyl group of 1 to 6 carbon atoms, such as a methyl group, an ethyl group, and a propyl group, which are the same as those for $R^{6a}$ described above.

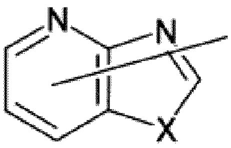 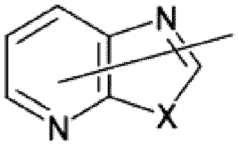 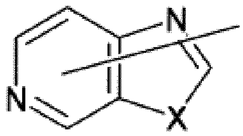

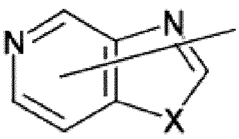 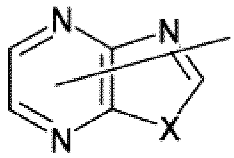 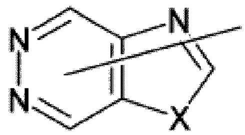

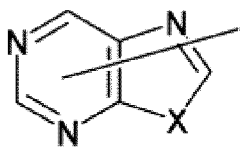 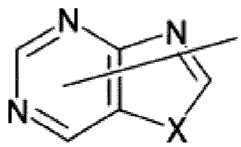

(In the aforementioned formulae, X has the same meanings as described above.)

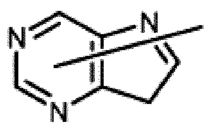 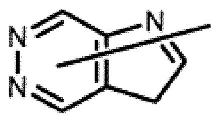 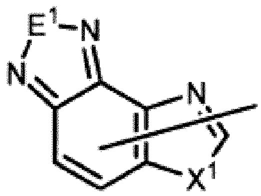 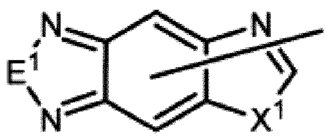

(In the aforementioned formulae, $X^1$ is $-CH_2-$,$-NR^c-$, an oxygen atom, a sulfur atom, -SO-, or $-SO_2-$, and E1 is $-NR^c-$, an oxygen atom or a sulfur atom. Herein, $R^c$ is a hydrogen atom, or an alkyl group of 1 to 6 carbon atoms such as a methyl group, an ethyl group, and a propyl group. (provided that, in each formula, each of the oxygen atom, the sulfur atom, -SO-, and $-SO_2-$ is not adjacent.))

(3) A group having a combination of an aromatic hydrocarbon ring and a heterocyclic ring

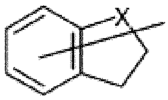
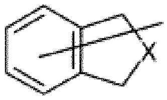
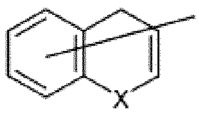
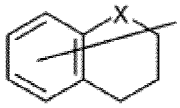

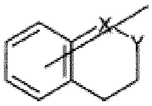
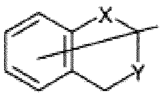
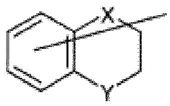
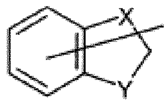
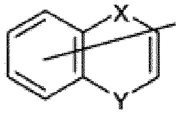

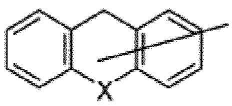
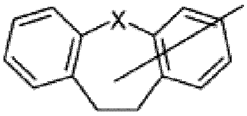
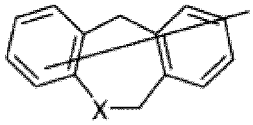

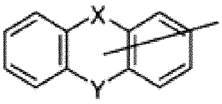
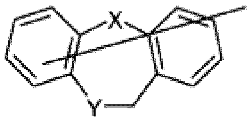
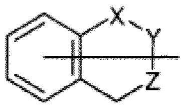
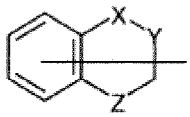

Herein, X, and Y each independently have the same meanings as described above. Z is $NR^7$, an oxygen atom, a sulfur atom, -SO-, or $-SO_2-$ (with a proviso that cases where an oxygen atom, a sulfur atom, -SO-, and $-SO_2-$ are each adjacent are excluded).

(4) An alkyl group having at least one aromatic ring selected from the group consisting of an aromatic hydrocarbon ring and an aromatic heterocyclic ring

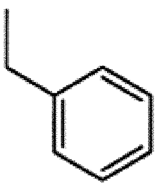
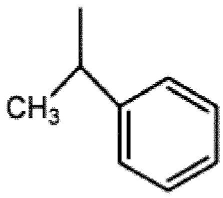
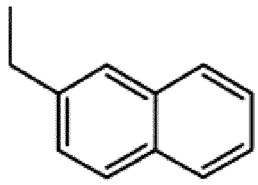

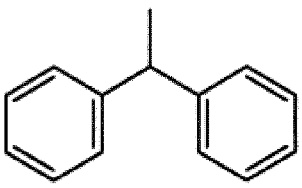
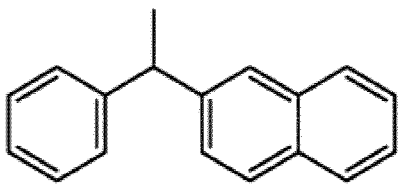

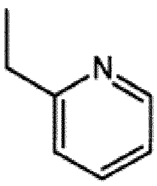
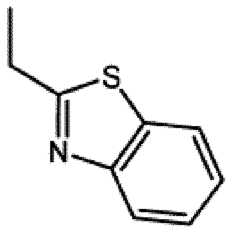
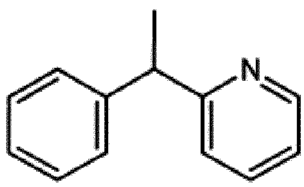

(5) An alkenyl group having at least one aromatic ring selected from the group consisting of an aromatic hydrocarbon ring and an aromatic heterocyclic ring

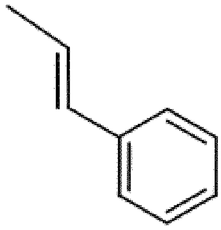
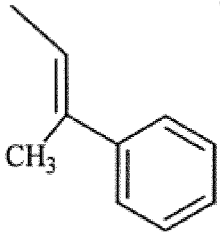
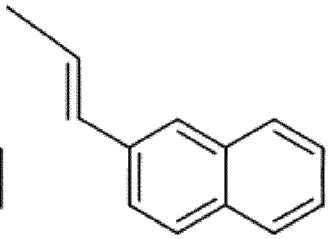
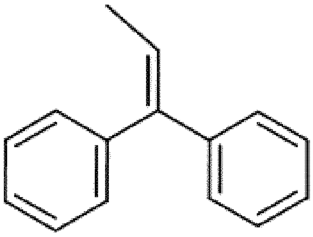
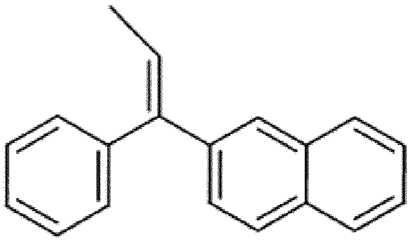

(6) An alkynyl group having at least one aromatic ring selected from the group consisting of an aromatic hydrocarbon ring and an aromatic heterocyclic ring

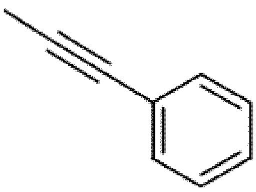
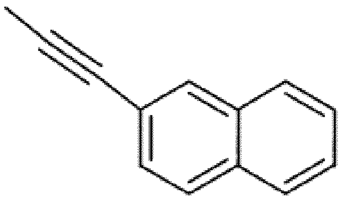

Of $A^x$ described above, an aromatic hydrocarbon ring group of 6 to 30 carbon atoms, an aromatic heterocyclic group of 4 to 30 carbon atoms, and a group of 4 to 30 carbon atoms having a combination of an aromatic hydrocarbon ring and a heterocyclic ring are preferable, and any of the groups shown below are more preferable.

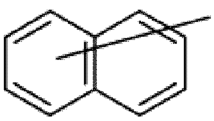
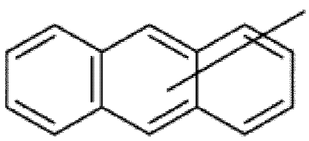
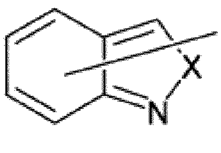
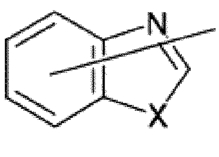
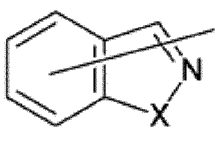
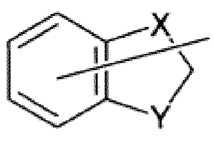
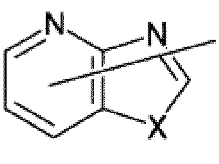
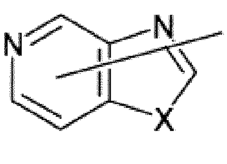
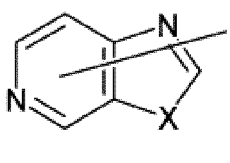
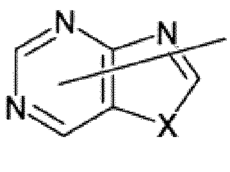

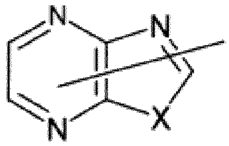 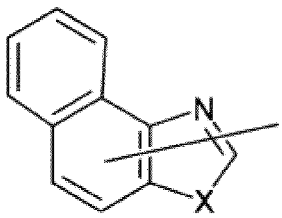 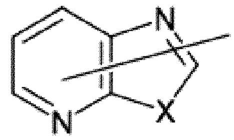

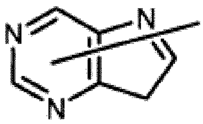 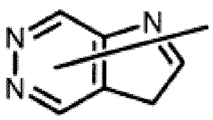 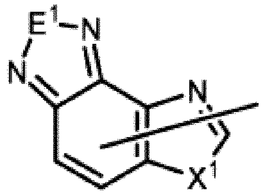 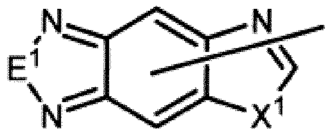

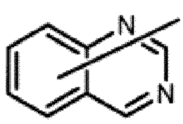 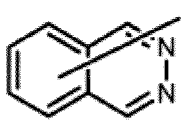 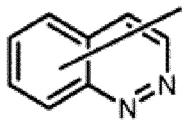

It is further preferable that $A^x$ is any of the following groups.

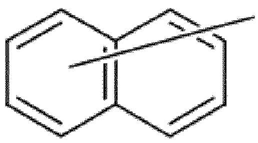 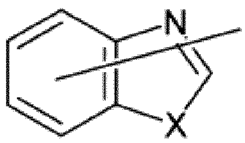

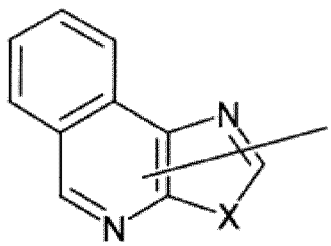 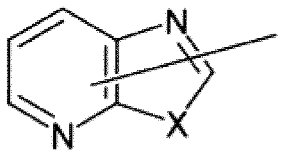 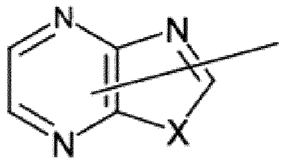

The ring that $A^x$ has may have a substituent. Examples of such a substituent may include a halogen atom, such as a fluorine atom and a chlorine atom; a cyano group; an alkyl group of 1 to 6 carbon atoms, such as a methyl group, an ethyl group, and a propyl group; an alkenyl group of 2 to 6 carbon atoms, such as a vinyl group and an allyl group; a halogenated alkyl group of 1 to 6 carbon atoms, such as a trifluoromethyl group; a substituted amino group, such as a dimethylamino group; an alkoxy group of 1 to 6 carbon atoms, such as a methoxy group, an ethoxy group, and an isopropoxy group; a nitro group; an aryl group, such as a phenyl group and a naphthyl group; $-C(=O)-R^8$; $-C(=O)-OR^8$; and $-SO_2R^6$. Herein, $R^8$ is an alkyl group of 1 to 6 carbon atoms, such as a methyl group and an ethyl group; or an aryl group of 6 to 14 carbon atoms, such as a phenyl group. In particular, it is preferable that the substituent is a halogen atom, a cyano group, an alkyl group of 1 to 6 carbon atoms, or an alkoxy group of 1 to 6 carbon atoms.

The ring that $A^x$ has may have a plurality of substituents that may be the same or different, and two adjacent substituents may be bonded together to form a ring. The formed ring may be a monocycle or a fused polycycle.

The "number of carbon atoms" in the organic group of 2 to 30 carbon atoms of $A^x$ means the total number of carbon atoms in the entire organic group which excludes carbon atoms in the substituents (the same applies to $A^y$ which will be described later).

In the aforementioned formula (I), $A^y$ is a hydrogen atom, an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, an alkynyl group of 2 to 20 carbon atoms optionally having a substituent, $-C(=O)-R^3$, $-SO_2-R^4$,$-C(=S)NH-R^9$, or an organic group of 2 to 30 carbon atoms having at least one aromatic ring selected from the group consisting of an aromatic hydrocarbon ring and an aromatic heterocyclic ring. Herein, $R^3$

is an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, or an aromatic hydrocarbon ring group of 5 to 12 carbon atoms. $R^4$ is an alkyl group of 1 to 20 carbon atoms, an alkenyl group of 2 to 20 carbon atoms, a phenyl group, or a 4-methylphenyl group. $R^9$ is an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, or an aromatic group of 5 to 20 carbon atoms optionally having a substituent.

Examples of the alkyl group of 1 to 20 carbon atoms in the alkyl group of 1 to 20 carbon atoms optionally having a substituent, of $A^y$, may include a methyl group, an ethyl group, a n-propyl group, an isopropyl group, a n-butyl group, an isobutyl group, a 1-methylpentyl group, a 1-ethylpentyl group, a sec-butyl group, a t-butyl group, a n-pentyl group, an isopentyl group, a neopentyl group, a n-hexyl group, an isohexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, and a n-icosyl group. The number of carbon atoms in the alkyl group of 1 to 20 carbon atoms optionally having a substituent is preferably 1 to 12, and further preferably 4 to 10.

Examples of the alkenyl group of 2 to 20 carbon atoms in the alkenyl group of 2 to 20 carbon atoms optionally having a substituent, of $A^y$, may include a vinyl group, a propenyl group, an isopropenyl group, a butenyl group, an isobutenyl group, a pentenyl group, a hexenyl group, a heptenyl group, an octenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, and an icocenyl group. The number of carbon atoms in the alkenyl group of 2 to 20 carbon atoms optionally having a substituent is preferably 2 to 12.

Examples of the cycloalkyl group of 3 to 12 carbon atoms in the cycloalkyl group of 3 to 12 carbon atoms optionally having a substituent, of $A^y$, may include a cyclopropyl group, a cyclobutyl group, a cyclopentyl group, a cyclohexyl group, and a cyclooctyl group.

Examples of the alkynyl group of 2 to 20 carbon atoms in the alkynyl group of 2 to 20 carbon atoms optionally having a substituent, of $A^y$, may include an ethynyl group, a propynyl group, a 2-propynyl group (propargyl group), a butynyl group, a 2-butynyl group, a 3-butynyl group, a pentynyl group, a 2-pentynyl group, a hexynyl group, a 5-hexynyl group, a heptynyl group, an octynyl group, a 2-octynyl group, a nonanyl group, a decanyl group, and a 7-decanyl group.

Examples of the substituents in the alkyl group of 1 to 20 carbon atoms optionally having a substituent and the alkenyl group of 2 to 20 carbon atoms optionally having a substituent, of $A^y$, may include a halogen atom, such as a fluorine atom and a chlorine atom; a cyano group; a substituted amino group, such as a dimethylamino group; an alkoxy group of 1 to 20 carbon atoms, such as a methoxy group, an ethoxy group, an isopropyl group, and a butoxy group; an alkoxy group of 1 to 12 carbon atoms that is substituted by an alkoxy group of 1 to 12 carbon atoms, such as a methoxymethoxy group and a methoxyethoxy group; a nitro group; an aryl group, such as a phenyl group and a naphthyl group; a cycloalkyl group of 3 to 8 carbon atoms, such as a cyclopropyl group, a cyclopentyl group, and a cyclohexyl group; a cycloalkyloxy group of 3 to 8 carbon atoms, such as a cyclopentyloxy group, and a cyclohexyloxy group; a cyclic ether group of 2 to 12 carbon atoms, such as a tetrahydrofuranyl group, a tetrahydropyranyl group, a dioxolanyl group, and a dioxanyl group; an aryloxy group of 6 to 14 carbon atoms, such as a phenoxy group, and a naphthoxy group; a fluoroalkoxy group of 1 to 12 carbon atoms in which at least one is substituted by a fluorine atom, such as a trifluoromethyl group, a pentafluoroethyl group, and $-CH_2CF_3$; a benzofuryl group; a benzopyranyl group; a benzodioxolyl group; a benzodioxanyl group;$-C(=O)-R^{7a}$; $-C(=O)-OR^{7a}$; $-SO_2R^{8a}$; $-SR^{10}$; an alkoxy group of 1 to 12 carbon atoms substituted by $-SR^{10}$; and a hydroxyl group. Herein, $R^{7a}$ and $R^{10}$ are each independently an alkyl group of 1 to 20 carbon atoms, an alkenyl group of 2 to 20 carbon atoms, a cycloalkyl group of 3 to 12 carbon atoms, or an aromatic hydrocarbon ring group of 6 to 12 carbon atoms. $R^{8a}$ is an alkyl group of 1 to 20 carbon atoms, an alkenyl group of 2 to 20 carbon atoms, a phenyl group, or a 4-methylphenyl group, which are the same as those for $R^4$ described above.

Examples of the substituent in the cycloalkyl group of 3 to 12 carbon atoms optionally having a substituent, of $A^y$, may include a halogen atom, such as a fluorine atom and a chlorine atom; a cyano group; a substituted amino group, such as a dimethylamino group; an alkyl group of 1 to 6 carbon atoms, such as a methyl group, an ethyl group, and a propyl group; an alkoxy group of 1 to 6 carbon atoms, such as a methoxy group, an ethoxy group, and an isopropoxy group; a nitro group; an aryl group, such as a phenyl group and a naphthyl group; a cycloalkyl group of 3 to 8 carbon atoms, such as a cyclopropyl group, a cyclopentyl group, and a cyclohexyl group; $-C(=O)-R^{7a}$;$-C(=O)-OR^{7a}$; $-SO_2R^{8a}$; and a hydroxyl group. Herein, $R^{7a}$ and $R^{8a}$ have the same meanings as described above.

Examples of the substituent in the alkynyl group of 2 to 20 carbon atoms optionally having a substituent, of $A^y$, may include substituents that are the same as the substituents in the alkyl group of 1 to 20 carbon atoms optionally having a substituent and the alkenyl group of 2 to 20 carbon atoms optionally having a substituent.

In the group represented by $-C(=O)-R^3$ of $A^y$, $R^3$ is an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, or an aromatic hydrocarbon ring group of 5 to 12 carbon atoms. Specific examples

thereof may include those exemplified as the examples of the alkyl group of 1 to 20 carbon atoms optionally having a substituent, the alkenyl group of 2 to 20 carbon atoms optionally having a substituent, and the cycloalkyl group of 3 to 12 carbon atoms optionally having a substituent, of $A^y$; and the aromatic hydrocarbon ring group of 5 to 12 carbon atoms, among the aromatic hydrocarbon ring groups described in $A^x$ described above.

In the group represented by $-SO_2-R^4$ of $A^y$, $R^4$ is an alkyl group of 1 to 20 carbon atoms, an alkenyl group of 2 to 20 carbon atoms, a phenyl group, or a 4-methylphenyl group. Specific examples of the alkyl group of 1 to 20 carbon atoms and the alkenyl group of 2 to 20 carbon atoms, of $R^4$, may include those exemplified as the examples of the alkyl group of 1 to 20 carbon atoms, and the alkenyl group of 2 to 20 carbon atoms, of $A^y$ described above.

In the group represented by $-C(=S)NH-R^9$ of $A^y$, $R^9$ is an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, or an aromatic group of 5 to 20 carbon atoms optionally having a substituent. Specific examples thereof may include those exemplified as the examples of the alkyl group of 1 to 20 carbon atoms optionally having a substituent, the alkenyl group of 2 to 20 carbon atoms optionally having a substituent, and the cycloalkyl group of 3 to 12 carbon atoms optionally having a substituent, of $A^y$ described above; and those of 5 to 20 carbon atoms among the aromatic groups such as the aromatic hydrocarbon ring groups and aromatic heteroaromatic ring groups described in $A^x$ described above.

Examples of the organic group of 2 to 30 carbon atoms having at least one aromatic ring selected from the group consisting of an aromatic hydrocarbon ring and an aromatic heterocyclic ring of $A^y$ may include those exemplified as the examples of $A^x$ described above.

Among these, $A^y$ is preferably a hydrogen atom, an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, an alkynyl group of 2 to 20 carbon atoms optionally having a substituent, $-C(=O)-R^3$, $-SO_2-R^4$, or an organic group of 2 to 30 carbon atoms having at least one aromatic ring selected from the group consisting of an aromatic hydrocarbon ring and an aromatic heterocyclic ring, and further preferably a hydrogen atom, an alkyl group of 1 to 20 carbon atoms optionally having a substituent, an alkenyl group of 2 to 20 carbon atoms optionally having a substituent, a cycloalkyl group of 3 to 12 carbon atoms optionally having a substituent, an alkynyl group of 2 to 20 carbon atoms optionally having a substituent, an aromatic hydrocarbon ring group of 6 to 12 carbon atoms optionally having a substituent, an aromatic heterocyclic group of 3 to 9 carbon atoms optionally having a substituent, a group of 3 to 9 carbon atoms having a combination of an aromatic hydrocarbon ring and a heterocyclic ring that may optionally have a substituent, $-C(=O)-R^3$, or a group represented by $-SO_2-R^4$. Herein, $R^3$ and $R^4$ have the same meanings as described above.

It is preferable that substituents in the alkyl group of 1 to 20 carbon atoms optionally having a substituent, the alkenyl group of 2 to 20 carbon atoms optionally having a substituent, and the alkynyl group of 2 to 20 carbon atoms optionally having a substituent, of $A^y$, are a halogen atom, a cyano group, an alkoxy group of 1 to 20 carbon atoms, an alkoxy group of 1 to 12 carbon atoms that is substituted by an alkoxy group of 1 to 12 carbon atoms, a phenyl group, a cyclohexyl group, a cyclic ether group of 2 to 12 carbon atoms, an aryloxy group of 6 to 14 carbon atoms, a hydroxyl group, a benzodioxanyl group, a phenylsulfonyl group, a 4-methylphenylsulfonyl group, a benzoyl group, or $-SR^{10}$. Herein, $R^{10}$ has the same meanings as described above.

It is preferable that substituents in the cycloalkyl group of 3 to 12 carbon atoms optionally having a substituent, the aromatic hydrocarbon ring group of 6 to 12 carbon atoms optionally having a substituent, the aromatic heterocyclic group of 3 to 9 carbon atoms optionally having a substituent, and the group of 3 to 9 carbon atoms having a combination of an aromatic hydrocarbon ring and a heterocyclic ring that may optionally have a substituent, of $A^y$, are a fluorine atom, an alkyl group of 1 to 6 carbon atoms, an alkoxy group of 1 to 6 carbon atoms, or a cyano group.

$A^x$ and $A^y$ may form a ring together. Examples of the ring may include an unsaturated heterocyclic ring of 4 to 30 carbon atoms optionally having a substituent and an unsaturated carbon ring of 6 to 30 carbon atoms optionally having a substituent.

The aforementioned unsaturated heterocyclic ring of 4 to 30 carbon atoms and the aforementioned unsaturated carbon ring of 6 to 30 carbon atoms are not particularly restricted, and may or may not have aromaticity.

Examples of the ring formed by $A^x$ and $A^y$ together may include rings shown below. The rings shown below are a moiety of:

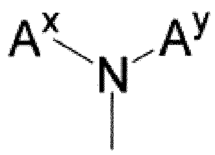

in the formula (I).

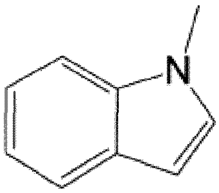
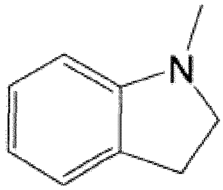
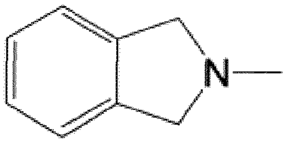
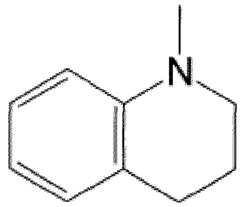

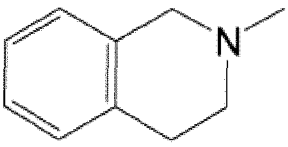
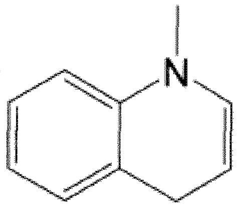
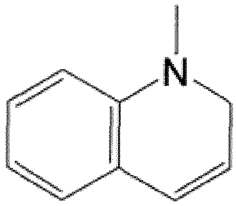
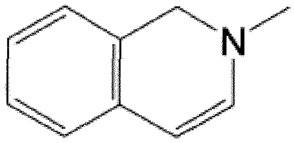

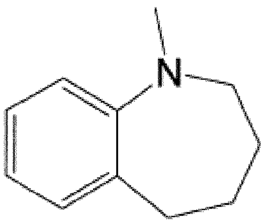
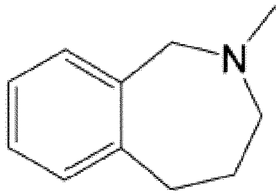
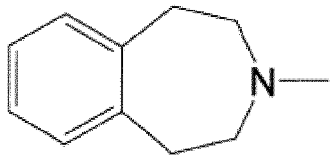

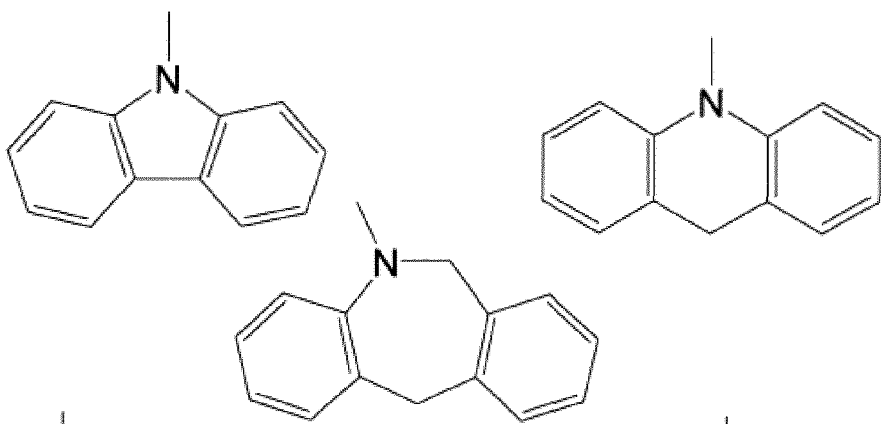

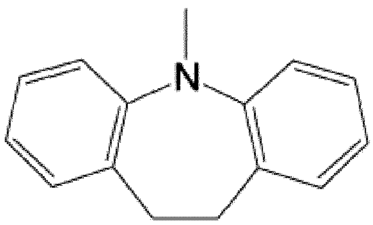
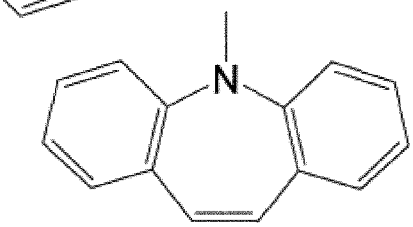

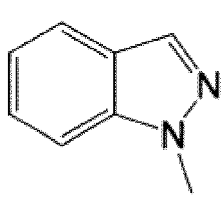
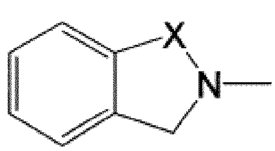

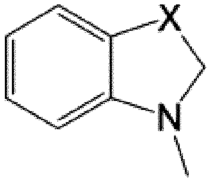
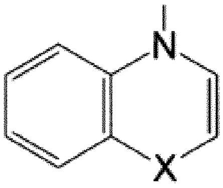
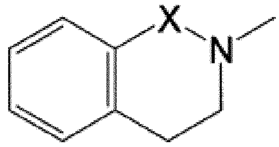

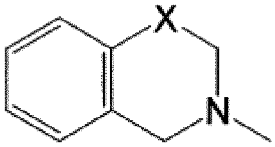
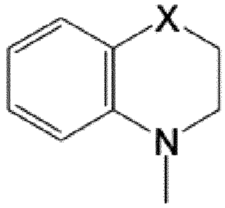
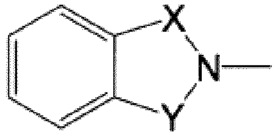

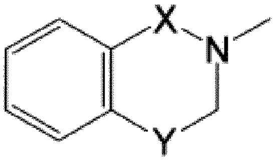
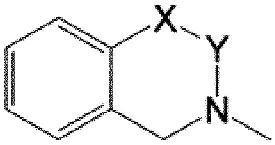
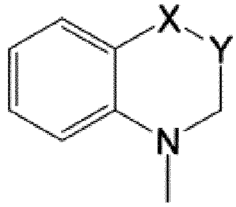

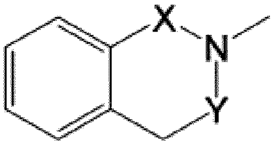
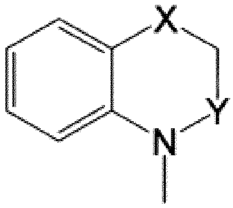
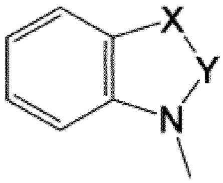

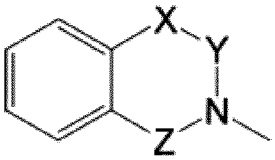
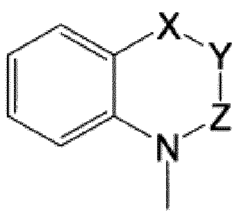

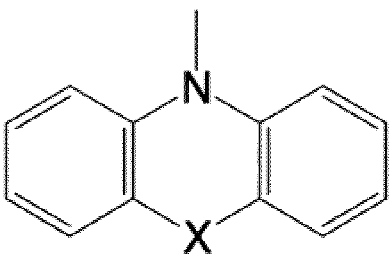
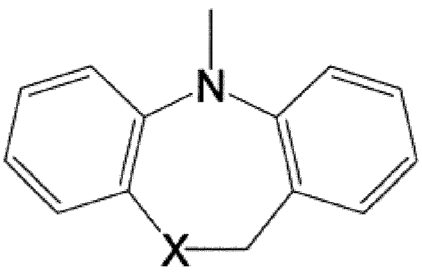

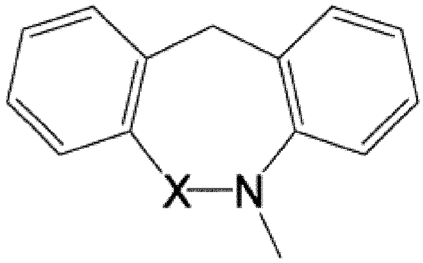

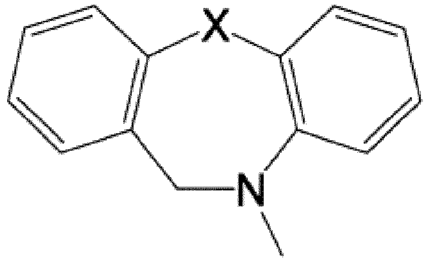

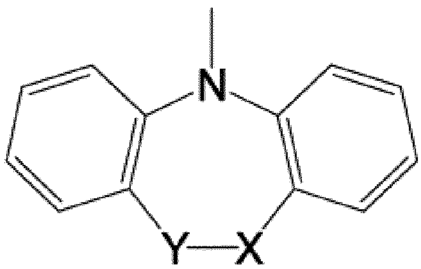

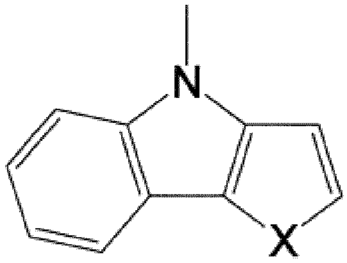

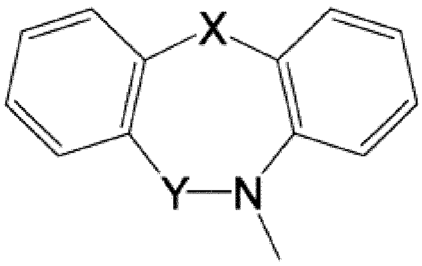

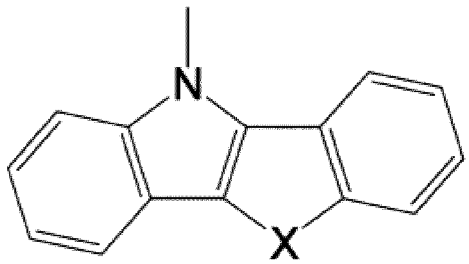

(In the formulae, X, Y, and Z have the same meanings as described above.)

The rings may have a substituent. Examples of the substituent may include those described as the substituent in the aromatic ring of $A^x$.

The total number of $\pi$ electrons contained in $A^x$ and $A^y$ is preferably 4 or more and more preferably 6 or more, and preferably 24 or less, more preferably 20 or less and particularly preferably 18 or less from the viewpoint of favorably expressing the desired effect of the present invention.

Examples of preferred combination of $A^x$ and $A^y$ may include the following combinations ($\alpha$) and ($\beta$).

($\alpha$) a combination of $A^x$ and $A^y$ in which $A^x$ is an aromatic hydrocarbon ring group of 4 to 30 carbon atoms, an aromatic heterocyclic group of 4 to 30 carbon atoms or a group of 4 to 30 carbon atoms having a combination of an aromatic hydrocarbon ring and a heterocyclic ring, $A^y$ is a hydrogen atom, a cycloalkyl group of 3 to 8 carbon atoms, an aromatic hydrocarbon ring group of 6 to 12 carbon atoms optionally having a substituent (a halogen atom, a cyano group, an alkyl group of 1 to 6 carbon atoms, an alkoxy group of 1 to 6 carbon atoms, or a cycloalkyl group of 3 to 8 carbon atoms), an aromatic heterocyclic group of 3 to 9 carbon atoms optionally having a substituent (a halogen atom, an alkyl group of 1 to 6 carbon atoms, an alkoxy group of 1 to 6 carbon atoms, or a cyano group), a group of 3 to 9 carbon atoms having a combination of an aromatic hydrocarbon ring and a heterocyclic ring that may optionally have a substituent (a halogen atom, an alkyl group of 1 to 6 carbon atoms, an alkoxy group of 1 to 6 carbon atoms, or a cyano group), an alkyl group of 1 to 20 carbon atoms optionally having a substituent, an alkenyl group of 1 to 20 carbon atoms optionally having a substituent, or an alkynyl group of 2 to 20 carbon atoms optionally having a substituent, and the substituent is any of a halogen atom, a cyano group, an alkoxy group of 1 to 20 carbon atoms, an alkoxy group of 1 to 12 carbon atoms that is substituted by an alkoxy group of 1 to 12 carbon atoms, a phenyl group, a cyclohexyl group, a cyclic ether group of 2 to 12 carbon atoms, an aryloxy group of 6 to 14 carbon atoms, a hydroxyl group, a benzodioxanyl group, a benzenesulfonyl group, a benzoyl group, and $-SR^{10}$.

($\beta$) a combination of $A^x$ and $A^y$ in which $A^x$ and $A^y$ together form an unsaturated heterocyclic ring or an unsaturated carbon ring.

Herein, $R^{10}$ has the same meanings as described above.

Examples of more preferred combination of $A^x$ and $A^y$ may include the following combination (γ).

(γ) a combination of $A^x$ and $A^y$ in which $A^x$ is any of groups having the following structures, $A^y$ is a hydrogen atom, a cycloalkyl group of 3 to 8 carbon atoms, an aromatic hydrocarbon ring group of 6 to 12 carbon atoms optionally having a substituent (a halogen atom, a cyano group, an alkyl group of 1 to 6 carbon atoms, an alkoxy group of 1 to 6 carbon atoms, or a cycloalkyl group of 3 to 8 carbon atoms), an aromatic heterocyclic group of 3 to 9 carbon atoms optionally having a substituent (a halogen atom, an alkyl group of 1 to 6 carbon atoms, an alkoxy group of 1 to 6 carbon atoms, or a cyano group), a group of 3 to 9 carbon atoms having a combination of an aromatic hydrocarbon ring and a heterocyclic ring that may optionally have a substituent (a halogen atom, an alkyl group of 1 to 6 carbon atoms, an alkoxy group of 1 to 6 carbon atoms, or a cyano group), an alkyl group of 1 to 20 carbon atoms optionally having a substituent, an alkenyl group of 1 to 20 carbon atoms optionally having a substituent, or an alkynyl group of 2 to 20 carbon atoms optionally having a substituent, and the substituent is any of a halogen atom, a cyano group, an alkoxy group of 1 to 20 carbon atoms, an alkoxy group of 1 to 12 carbon atoms that is substituted by an alkoxy group of 1 to 12 carbon atoms, a phenyl group, a cyclohexyl group, a cyclic ether group of 2 to 12 carbon atoms, an aryloxy group of 6 to 14 carbon atoms, a hydroxyl group, a benzodioxanyl group, a benzenesulfonyl group, a benzoyl group, and $-SR^{10}$. Herein, $R^{10}$ has the same meanings as described above.

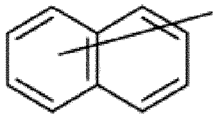
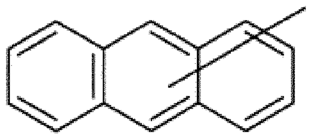

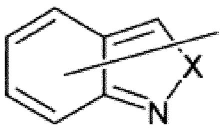
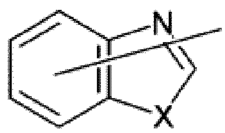
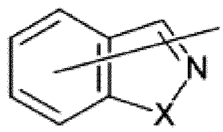
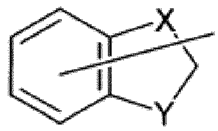

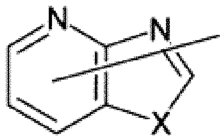
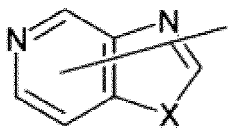
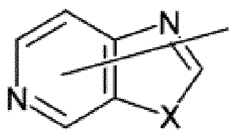

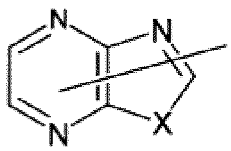
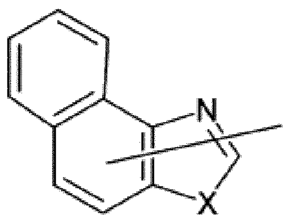
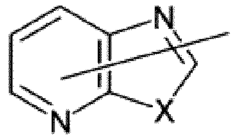

(In the formulae, X and Y have the same meanings as described above.)

Examples of particularly preferred combination of $A^x$ and $A^y$ may include the following combination (δ).

(δ) a combination of $A^x$ and $A^y$ in which $A^x$ is any of groups having the following structures, $A^y$ is a hydrogen atom, a cycloalkyl group of 3 to 8 carbon atoms, an aromatic hydrocarbon ring group of 6 to 12 carbon atoms optionally having a substituent (a halogen atom, a cyano group, an alkyl group of 1 to 6 carbon atoms, an alkoxy group of 1 to 6 carbon atoms, or a cycloalkyl group of 3 to 8 carbon atoms), an aromatic heterocyclic group of 3 to 9 carbon atoms optionally having a substituent (a halogen atom, an alkyl group of 1 to 6 carbon atoms, an alkoxy group of 1 to 6 carbon atoms, or a cyano group), a group of 3 to 9 carbon atoms having a combination of an aromatic hydrocarbon ring and a heterocyclic ring that may optionally have a substituent (a halogen atom, an alkyl group of 1 to 6 carbon atoms, an alkoxy group of 1 to 6 carbon atoms, or a cyano group), an alkyl group of 1 to 20 carbon atoms optionally having a substituent, an alkenyl group of 1 to 20 carbon atoms optionally having a substituent, or an alkynyl group of 2 to 20 carbon atoms optionally having a substituent, and the substituent is any of a halogen atom, a cyano group, an alkoxy group of 1 to 20 carbon atoms, an alkoxy group of 1 to 12 carbon atoms that is substituted by an alkoxy group of 1 to 12 carbon atoms, a phenyl group, a cyclohexyl group, a cyclic ether group of 2 to 12 carbon atoms, an aryloxy group of 6 to 14 carbon atoms, a hydroxyl group, a benzodioxanyl group, a benzenesulfonyl group, a benzoyl group, and $-SR^{10}$. In the following formulae,

X has the same meanings as described above. Herein, $R^{10}$ has the same meanings as described above.

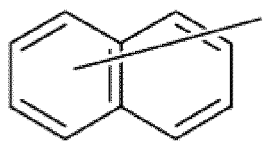

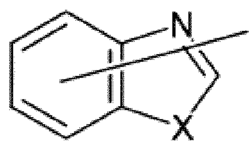

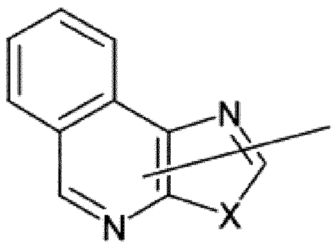

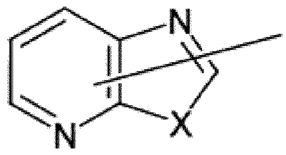

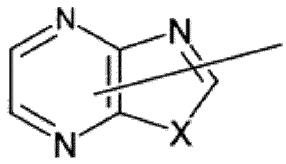

In the formula (I) mentioned above, $A^1$ is a trivalent aromatic group optionally having a substituent. The trivalent aromatic group may be a trivalent carbocyclic aromatic group or a trivalent heterocyclic aromatic group. From the viewpoint of favorably expressing the desired effect of the present invention, the trivalent aromatic group is preferably the trivalent carbocyclic aromatic group, more preferably a trivalent benzene ring group or a trivalent naphthalene ring group, and further preferably a trivalent benzene ring group or a trivalent naphthalene ring group that is represented by the following formula. In the following formulae, substituents $Y^1$ and $Y^2$ are described for the sake of convenience to clearly show a bonding state ($Y^1$ and $Y^2$ have the same meanings as described above, and the same applies to the following).

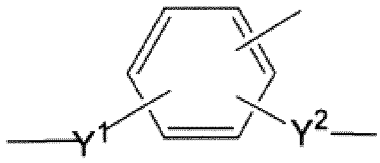

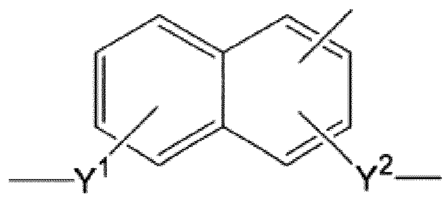

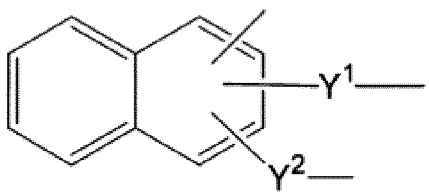

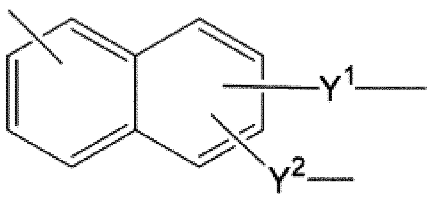

Among these, $A^1$ is more preferably a group represented by each of the following formulae (A11) to (A25), further preferably a group represented by the formula (A11), (A13), (A15), (A19), or (A23), and particularly preferably a group represented by the formula (A11) or (A23).

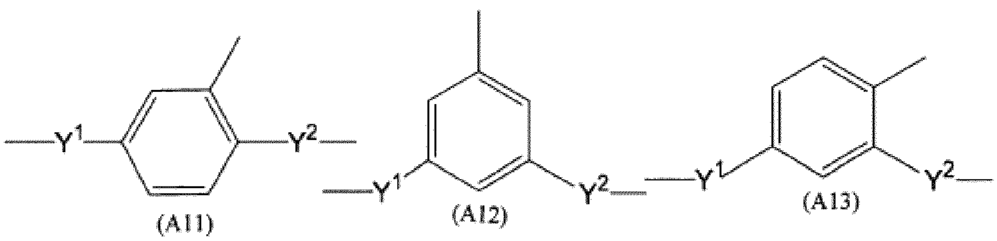

(A11) (A12) (A13)

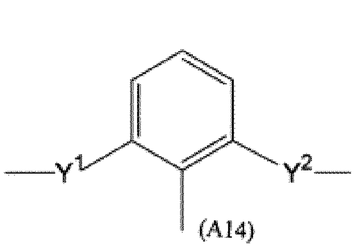
(A14)

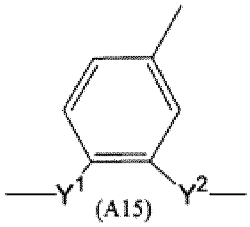
(A15)

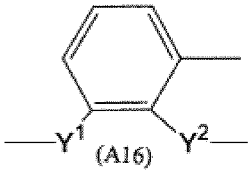
(A16)

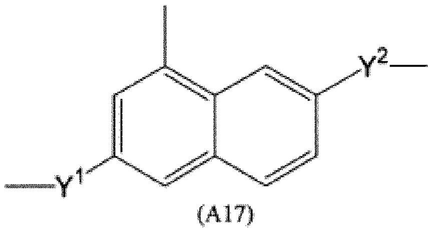
(A17)

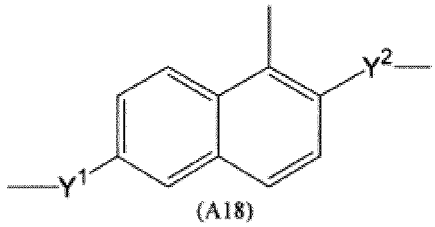
(A18)

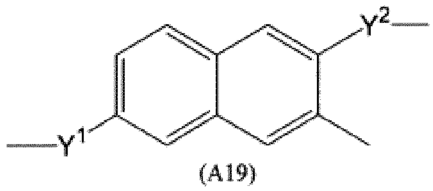
(A19)

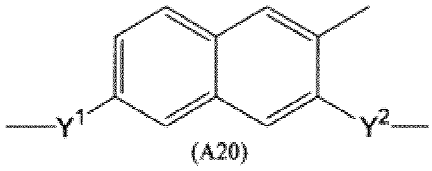
(A20)

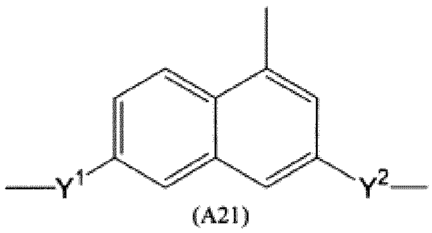
(A21)

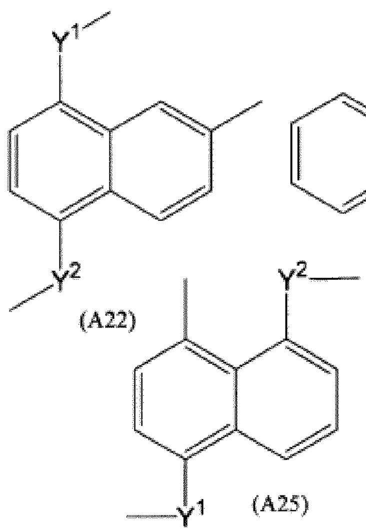
(A22)

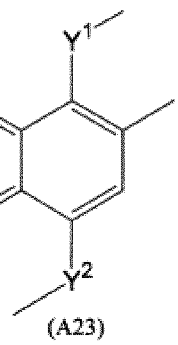
(A23)

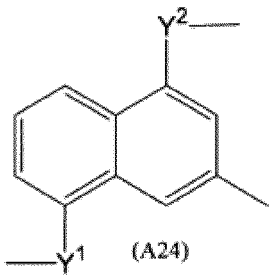
(A24)

(A25)

Examples of the substituent that may be included in the trivalent aromatic group of $A^1$ may include those described as the substituent in the aromatic ring of $A^x$ described above. It is preferable that $A^1$ is a trivalent aromatic group having no substituent.

In the formula (I) mentioned above, $A^2$ and $A^3$ are each independently a divalent alicyclic hydrocarbon group of 3 to 30 carbon atoms optionally having a substituent. Examples of the divalent alicyclic hydrocarbon group of 3 to 30 carbon atoms may include a cycloalkanediyl group of 3 to 30 carbon atoms, and a divalent alicyclic fused ring group of 10 to 30 carbon atoms.

Examples of the cycloalkanediyl group of 3 to 30 carbon atoms may include a cyclopropanediyl group; a cyclobutanediyl group, such as a cyclobutane-1,2-diyl group and a cyclobutane-1,3-diyl group; a cyclopentanediyl group, such as a cyclopentane-1,2-diyl group and a cyclopentane-1,3-diyl group; a cyclohexanediyl group, such as a cyclohexane-1,2-diyl group, a cyclohexane-1,3-diyl group, and a cyclohexane-1,4-diyl group; a cycloheptanediyl group, such as a cycloheptane-1,2-diyl group, a cycloheptane-1,3-diyl group, and a cycloheptane-1,4-diyl group; a cyclooctanediyl group, such as a cyclooctane-1,2-diyl group, a cyclooctane-1,3-diyl group, a cyclooctane-1,4-diyl group, and a cyclooctane-1,5-diyl group; a cyclodecanediyl group, such as a cyclodecane-1,2-diyl group, a cyclodecane-1,3-diyl group, a cyclodecane-1,4-diyl group, and a cyclodecane-1,5-diyl group; a cyclododecanediyl group, such as a cyclododecane-1,2-diyl group, a cyclododecane-1,3-diyl group, a cyclododecane-1,4-diyl group, and a cyclododecane-1,5-diyl group; a cyclotetradecanediyl group, such as a cyclotetradecane-1,2-diyl group, a cyclotetradecane-1,3-diyl group, a cyclotetradecane-1,4-diyl group, a cyclotetradecane-1,5-diyl group, and a cyclotetradecane-1,7-diyl group; and a cycloeicosanediyl group, such as a cycloeicosane-1,2-diyl group and a cycloeicosane-1,10-diyl group.

Examples of the divalent alicyclic fused ring group of 10 to 30 carbon atoms may include a decalindiyl group, such as a decalin-2,5-diyl group and a decalin-2,7-diyl group; an adamantanediyl group, such as an adamantane-1,2-diyl group and an adamantane-1,3-diyl group; and a bicyclo[2.2.1]heptanediyl group, such as a bicyclo[2.2.1]heptane-2,3-diyl group, a bicyclo[2.2.1]heptane-2,5-diyl group, and a bicyclo[2.2.1]heptane-2,6-diyl group.

The divalent alicyclic hydrocarbon groups may further have a substituent at any position. Examples of the substituent may include those described as the substituent in the aromatic ring of $A^x$ described above.

Among these, $A^2$ and $A^3$ are preferably a divalent alicyclic hydrocarbon group of 3 to 12 carbon atoms, more preferably a cycloalkanediyl group of 3 to 12 carbon atoms, further preferably a group represented by each of the following formulae (A31) to (A34), and particularly preferably the group represented by the following formula (A32).

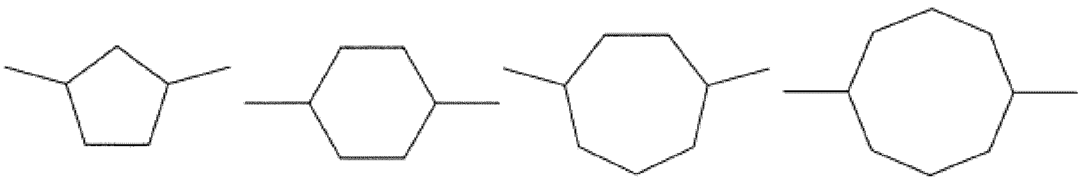

(A31) (A32) (A33) (A34)

The divalent alicyclic hydrocarbon group of 3 to 30 carbon atoms may exist in forms of cis- and trans-stereoisomers that are on the basis of difference of stereoconfiguration of carbon atoms bonded to $Y^1$ and $Y^3$ (or $Y^2$ and $Y^4$). For example, when the group is a cyclohexane-1,4-diyl group, a cis-isomer (A32a) and a trans-isomer (A32b) may exist, as described below.

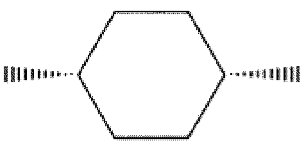

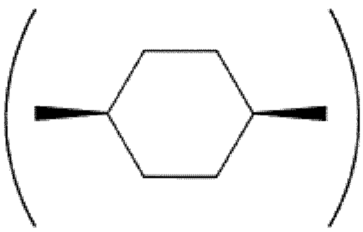

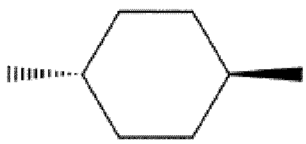

(A32a) (A32b)

The aforementioned divalent alicyclic hydrocarbon group of 3 to 30 carbon atoms may be a cis-isomer, a trans-isomer, or an isomeric mixture of cis- and trans-isomers. Since the orientation quality is favorable, the group is preferably the trans-isomer or the cis-isomer, and more preferably the trans-isomer.

In the formula (I) mentioned above, $A^4$ and $A^5$ are each independently a divalent aromatic group of 6 to 30 carbon atoms optionally having a substituent. The aromatic group of $A^4$ and $A^5$ may be monocyclic or polycyclic. Specific preferable examples of $A^4$ and $A^5$ are as follows.

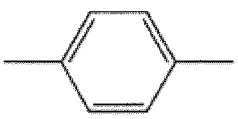

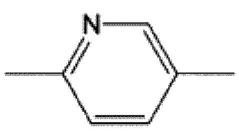

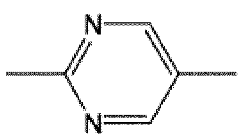

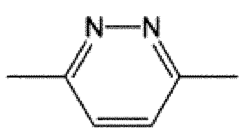

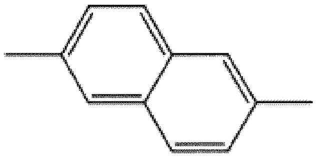
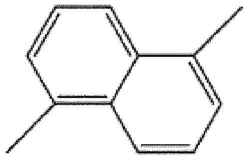
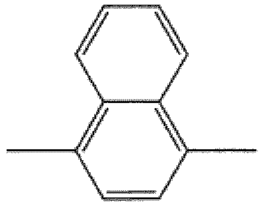

The divalent aromatic groups of $A^4$ and $A^5$ described above may have a substituent at any position. Examples of the substituent may include a halogen atom, a cyano group, a hydroxyl group, an alkyl group of 1 to 6 carbon atoms, an alkoxy group of 1 to 6 carbon atoms, a nitro group, and a -C(=O)-$OR^{8b}$ group. Herein, $R^{8b}$ is an alkyl group of 1 to 6 carbon atoms. In particular, it is preferable that the substituent is a halogen atom, an alkyl group of 1 to 6 carbon atoms, or an alkoxy group. Of the halogen atoms, a fluorine atom is more preferable, of the alkyl groups of 1 to 6 carbon atoms, a methyl group, an ethyl group, and a propyl group are more preferable, and of the alkoxy groups, a methoxy group and an ethoxy group are more preferable.

Among these, from the viewpoint of favorably expressing the desired effect of the present invention, $A^4$ and $A^5$ are each independently preferably a group represented by the following formula (A41), (A42), or (A43) and optionally having a substituent, and particularly preferably the group represented by the formula (A41) and optionally having a substituent.

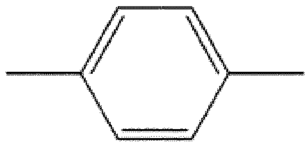
(A41)

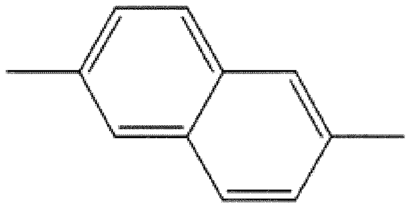
(A42)

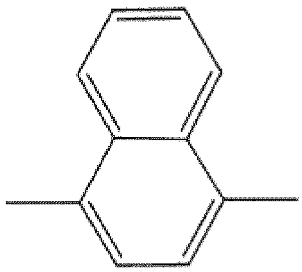
(A43)

In the formula (I) mentioned above, $Q^1$ is a hydrogen atom or an alkyl group of 1 to 6 carbon atoms optionally having a substituent. Examples of the alkyl group of 1 to 6 carbon atoms optionally having a substituent may include the alkyl group of 1 to 6 carbon atoms among the alkyl groups of 1 to 20 carbon atoms optionally having a substituent that are described as $A^y$ described above. Among these, $Q^1$ is preferably a hydrogen atom or an alkyl group of 1 to 6 carbon atoms, and more preferably a hydrogen atom or a methyl group.

In the formula (I) mentioned above, m and n are each independently 0 or 1. Among these, m is preferably 1, and n is preferably 1.

The compound (I) may be produced, for example, by the following reaction.

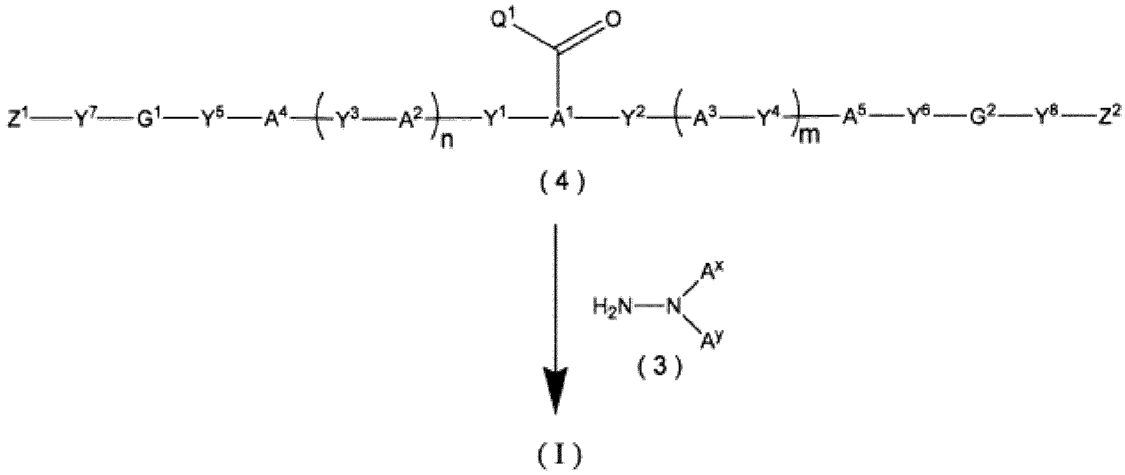

(4)

(3)

(I)

(In the formula, $Y^1$ to $Y^8$, $G^1$, $G^2$, $Z^1$, $Z^2$, $A^x$, $A^y$, $A^1$ to $A^5$, $Q^1$, m, and n have the same meanings as described above.)

As shown in the aforementioned reaction formula, the compound (I) may be produced by a reaction of a hydrazine compound represented by a formula (3) with a carbonyl compound represented by a formula (4). Hereinafter, the hydrazine compound represented by the formula (3) may be appropriately referred to as "hydrazine compound (3)". The carbonyl compound represented by the formula (4) may be appropriately referred to as "carbonyl compound (4)".

In the aforementioned reaction, the molar ratio of "the hydrazine compound (3) : the carbonyl compound (4)" is preferably 1:2 to 2:1, and more preferably 1:1.5 to 1.5:1. When the compounds are reacted at such a molar ratio, the compound (I) as a target can be highly selectively produced in high yield.

In this case, the reaction system may include an acid catalyst including an organic acid, such as (±)-10-camphorsulfonic acid and p-toluene sulfonic acid; and an inorganic acid, such as hydrochloric acid and sulfuric acid. When the acid catalyst is used, the reaction time may be shortened, and the yield may be improved. The amount of the acid catalyst is usually 0.001 mol to 1 mol relative to 1 mol of the carbonyl compound (4). The acid catalyst as it is may be mixed in the reaction system. Alternatively, the acid catalyst to be mixed may be in a solution form in which the acid catalyst is dissolved in an appropriate solution.

As the solvent for use in the reaction, a solvent inert to the reaction may be used. Examples of the solvent may include an alcohol-based solvent, such as methyl alcohol, ethyl alcohol, n-propyl alcohol, isopropyl alcohol, n-butyl alcohol, isobutyl alcohol, sec-butyl alcohol, and t-butyl alcohol; an ether-based solvent, such as diethyl ether, tetrahydrofuran, 1,2-dimethoxyethane, 1,4-dioxane, and cyclopentyl methyl ether; an ester-based solvent, such as ethyl acetate, propyl acetate, and methyl propionate; an aromatic hydrocarbon-based solvent, such as benzene, toluene, and xylene; an aliphatic hydrocarbon-based solvent, such as n-pentane, n-hexane, and n-heptane; an amide-based solvent, such as N,N-dimethylformamide, N-methylpyrrolidone, and hexamethylphosphoric triamide; a sulfur-containing solvent, such as dimethylsulfoxide, and sulfolane; and a mixed solvent of two or more types thereof. Among these, the alcohol-based solvent, the ether-based solvent, and a mixed solvent of the alcohol-based solvent and the ether-based solvent are preferable.

The amount of the solvent used is not particularly limited, and may be determined in consideration of type of compound to be used, reaction scale, and the like. The specific amount of the solvent used is usually 1 g to 100 g relative to 1 g of the hydrazine compound (3).

The reaction can smoothly proceed in a temperature range that is usually -10°C or higher and equal to or lower than the boiling point of the solvent used. The reaction time of each reaction may vary depending on the reaction scale, and is usually several minutes to several hours.

The hydrazine compound (3) may be produced as follows.

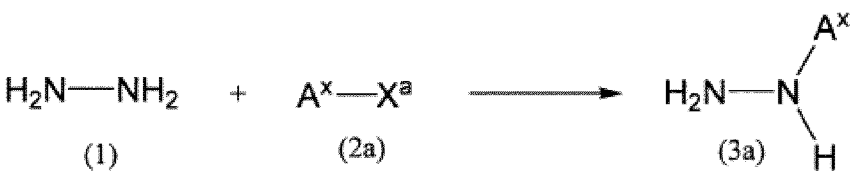

(1) (2a) (3a)

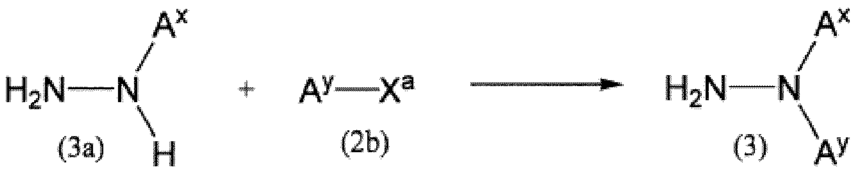

(3a) (2b) (3)

(wherein, $A^x$ and $A^y$ have the same meanings as described above, and $X^a$ is a leaving group, such as a halogen atom, a methanesulfonyloxy group, and a p-toluenesulfonyloxy group.)

As shown in the aforementioned reaction formula, a corresponding hydrazine compound (3a) can be obtained by a reaction of a compound represented by a formula (2a) with hydrazine (1) in an appropriate solvent. In this reaction, the molar ratio of "the compound (2a) : the hydrazine (1)" is preferably 1:1 to 1:20, and more preferably 1:2 to 1:10. Further, the hydrazine compound (3a) can be reacted with a compound represented by a formula (2b) to obtain the hydrazine compound (3).

As hydrazine (1), hydrazine monohydrate may be usually used. As hydrazine (1), a commercially available product as it is may be used.

As the solvent for use in this reaction, a solvent inert to the reaction may be used. Examples of the solvent may include an alcohol-based solvent, such as methyl alcohol, ethyl alcohol, n-propyl alcohol, isopropyl alcohol, n-butyl alcohol, isobutyl alcohol, sec-butyl alcohol, and t-butyl alcohol; an ether-based solvent, such as diethyl ether, tetrahydrofuran, 1,2-dimethoxyethane, 1,4-dioxane, and cyclopentyl methyl ether; an aromatic hydrocarbon-based solvent, such as benzene, toluene, and xylene; an aliphatic hydrocarbon-based solvent, such as n-pentane, n-hexane, and n-heptane; an amide-based solvent, such as N,N-dimethylformamide, N-methylpyrrolidone, and hexamethylphosphoric triamide; a sulfur-containing solvent, such as dimethylsulfoxide, and sulfolane; and a mixed solvent of two or more types thereof. Among these, the alcohol-based solvent, the ether-based solvent, and a mixed solvent of the alcohol-based solvent and the ether-based solvent are preferable.

The amount of the solvent used is not particularly limited, and may be determined in consideration of type of compound to be used, reaction scale, and the like. For example, the specific amount of the solvent used is usually 1 g to 100 g relative to 1 g of hydrazine.

The reaction can smoothly proceed in a temperature range that is usually -10°C or higher and equal to or lower than the boiling point of the solvent used. The reaction time of each reaction may vary depending on the reaction scale, and is usually several minutes to several hours.

The hydrazine compound (3) may also be produced by reducing a diazonium salt (5) through a publicly known method, as described below.

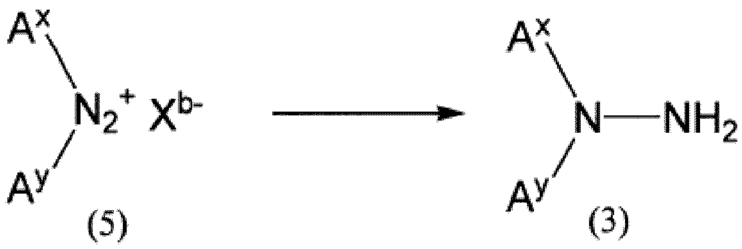

(5) (3)

In the formula (5), $A^x$ and $A^y$ have the same meanings as described above, and $X^{b-}$ is an anion that is a counter ion of diazonium. Examples of $X^{b-}$ may include an inorganic anion, such as a hexafluorophosphate ion, a fluoroborate ion, a chloride ion, and a sulfate ion; and an organic anion, such as a polyfluoroalkylcarbonate ion, a polyfluoroalkylsulfonate ion, a tetraphenylborate ion, an aromatic carboxylate ion, and an aromatic sulfonate ion.

Examples of the reducing agent used in the aforementioned reaction may include a metal salt reducing agent. The metal salt reducing agent is generally a compound containing low-valent metal or a compound composed of a metal ion and a hydride source

(see "Yuki Gosei Jikkenhou Handbook (Organic synthesis experimental method handbook)", 1990, edited by The Society of Synthetic Organic Chemistry, Japan, published by Maruzen Co., Ltd., p. 810).

Examples of the metal salt reducing agent may include $NaAlH_4$, $NaAlH_p(Or)_q$ (wherein p and q are each independently an integer of 1 to 3, p + q = 4, and r is an alkyl group of 1 to 6 carbon atoms), $LiAlH_4$, $iBu_2AlH$, $LiBH_4$, $NaBH_4$, $SnCl_2$, $CrCl_2$, and $TiCl_3$. Herein, "iBu" represents an isobutyl group.

In the reduction reaction, a publicly known reaction condition may be adopted. For example, the reaction may be performed under conditions described in documents including Japanese Patent Application Laid-Open No. 2005-336103 A, Shin Jikken Kagaku Koza (New course of experimental chemistry), 1978, published by Maruzen Co.,

Ltd., vol. 14, and Jikken Kagaku Koza (Course of experimental chemistry), 1992, published by Maruzen Co., Ltd., vol. 20.

The diazonium salt (5) may be produced from a compound such as aniline by an ordinary method.

The carbonyl compound (4) may be produced, for example, by appropriately bonding and modifying a plurality of publicly known compounds having a desired structure through any combination of reactions of forming an ether linkage (-O-), an ester linkage (-C(=O)-O- and -O-C(=O)-), a carbonate linkage (-O-C(=O)-O-), and an amide linkage (-C(=O)NH- and -NH-C(=O)-).

An ether linkage may be formed as follows.

(i) A compound represented by a formula: D1-hal (hal is a halogen atom, and the same applies to the following) and a compound represented by a formula: D2-OMet (Met is an alkaline metal (mainly sodium), and the same applies to the following) are mixed and condensed (Williamson synthesis). In the formulae, D1 and D2 are an optional organic group (the same applies to the following).

(ii) A compound represented by a formula: D1-hal and a compound represented by a formula: D2-OH are mixed in the presence of a base, such as sodium hydroxide and potassium hydroxide and condensed.

(iii) A compound represented by a formula: D1-J (J is an epoxy group) and a compound represented by a formula: D2-OH are mixed in the presence of a base, such as sodium hydroxide and potassium hydroxide and condensed.

(iv) A compound represented by a formula: D1-OFN (OFN is a group having an unsaturated bond) and a compound represented by a formula: D2-OMet are mixed in the presence of a base, such as sodium hydroxide and potassium hydroxide and subjected to an addition reaction.

(v) A compound represented by a formula: D1-hal and a compound represented by a formula: D2-OMet are mixed in the presence of copper or cuprous chloride and condensed (Ullmann condensation).

An ester linkage and an amide linkage may be formed as follows.

(vi) A compound represented by a formula: D1-COOH and a compound represented by a formula: D2-OH or D2-$NH_2$ are subjected to dehydration condensation in the presence of a dehydration condensation agent (N,N-dicyclohexylcarbodiimide, etc.).

(vii) A compound represented by a formula: D1-COOH is reacted with a halogenating agent to obtain a compound represented by a formula: D1-CO-hal, and the compound is reacted with a compound represented by a formula: D2-OH or D2-$NH_2$ in the presence of a base.

(viii) A compound represented by a formula: D1-COOH is reacted with an acid anhydride to obtain a mixed acid anhydride, and the mixed acid anhydride is reacted with a compound represented by a formula: D2-OH or D2-$NH_2$.

(ix) A compound represented by a formula: D1-COOH and a compound represented by a formula: D2-OH or D2-$NH_2$ are subjected to dehydration condensation in the presence of an acid catalyst or a base catalyst.

More specifically, the carbonyl compound (4) may be produced through a process shown in the following reaction formula.

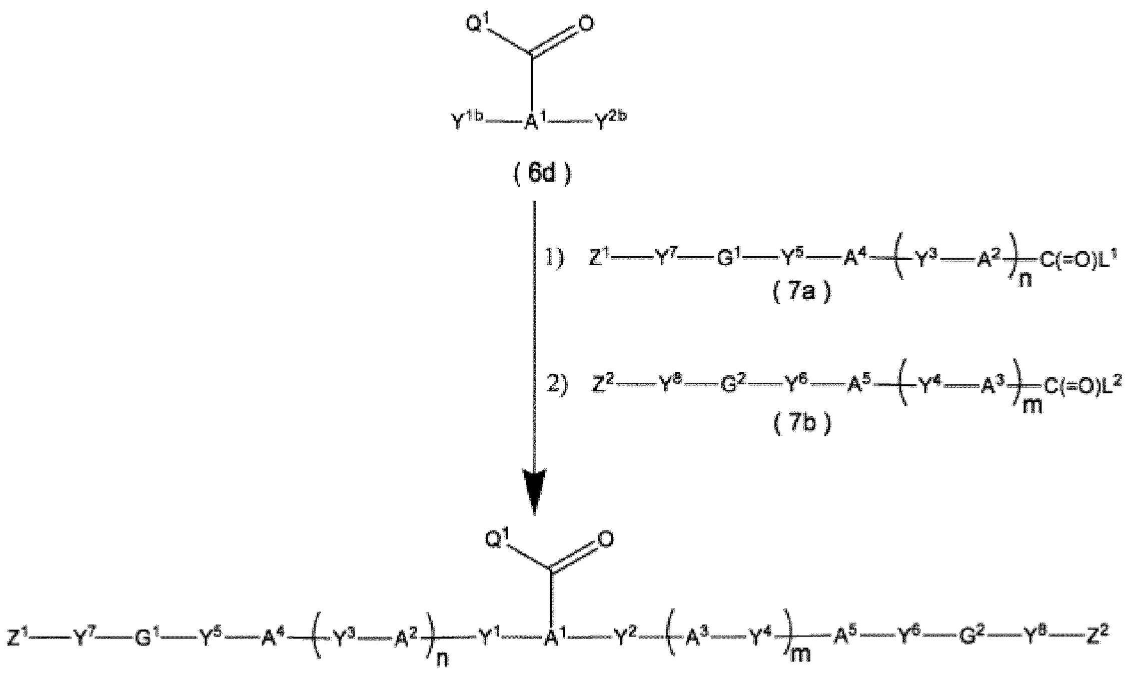


(6d) (7a) (7b) (4)

(In the formula, $Y^1$ to $Y^8$, $G^1$, $G^2$, $Z^1$, $Z^2$, $A^1$ to $A^5$, $Q^1$, m, and n have the same meanings as described above; $L^1$ and $L^2$ are each independently a leaving group, such as a hydroxyl group, a halogen atom, a methanesulfonyloxy group, and a p-toluenesulfonyloxy group; $-Y^{1b}$ is a group that is capable of being reacted with $-L^1$ to be $-Y^1-$; and $-Y^{2b}$ is a group that is capable of being reacted with $-L^2$ to be $-Y^2-$.)

As shown in the aforementioned reaction formula, the carbonyl compound (4) may be produced by reacting a compound represented by a formula (6d) with a compound represented by a formula (7a) followed by a compound represented by a formula (7b) by using a reaction of forming an ether linkage (-O-), an ester linkage (-C(=O)-O- and -O-C(=O)-), or a carbonate linkage (-O-C(=O)-O-).

Specifically, a method for producing a compound (4') in which $Y^1$ is a group represented by a formula: $Y^{11}$-C(=O)-O- and a group represented by a formula: $Z^2$-$Y^8$-$G^2$-$Y^6$-$A^5$-$(Y^4$-$A^3)_m$-$Y^2$- is the same as a group represented by a formula: $Z^1$-$Y^7$-$G^1$-$Y^5$-$A^4$-$(Y^3$-$A^2)_n$-$Y^1$- is as follows.

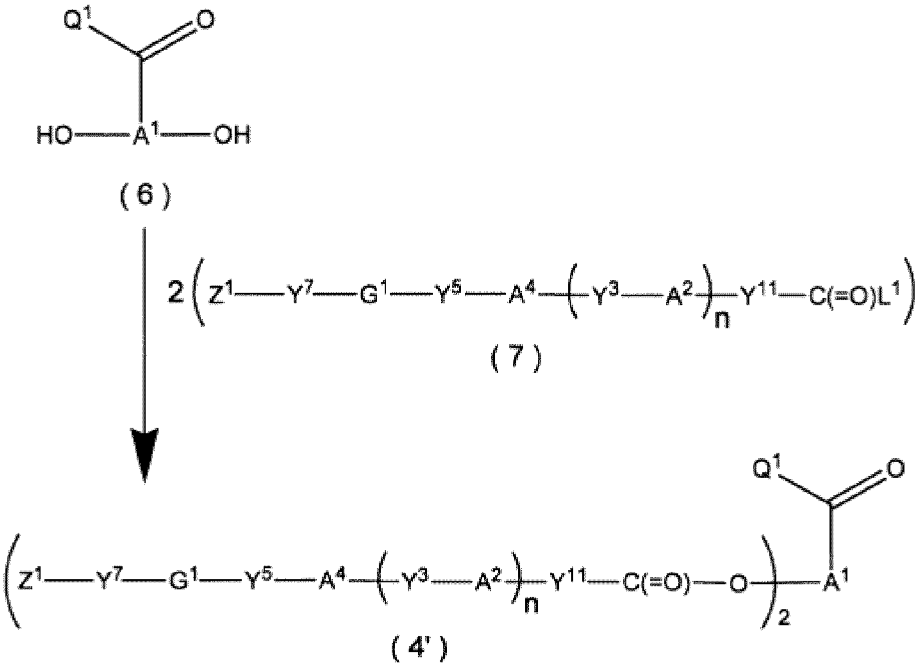

(6) (7) (4')

(In the formula, $Y^3$, $Y^5$, $Y^7$, $G^1$, $Z^1$, $A^1$, $A^2$, $A^4$, $Q^1$, n, and $L^1$ have the same meanings as described above; $Y^{11}$ is a group having a structure with which $Y^{11}$-C(=O)-O-corresponds to $Y^1$; and $Y^1$ has the same meanings as described above.)

As shown in the aforementioned reaction formula, the compound (4') may be produced by a reaction of a dihydroxy compound represented by a formula (6) (compound (6)) with a compound represented by a formula (7) (compound (7)). In the aforementioned reaction, the molar ratio of "the compound (6) : the compound (7)" is preferably 1:2 to 1:4, and more preferably 1:2 to 1:3. When the compounds are reacted at such a molar ratio, the compound (4') as a target can be highly selectively produced in high yield.

When the compound (7) is a compound in which $L^1$ is a hydroxyl group (carboxylic acid), the reaction may be performed in the presence of a dehydration condensation agent such as 1-ethyl-3-(3-dimethylaminopropyl)carbodiimide hydrochloride and dicyclohexyl carbodiimide, to obtain a target compound. The amount of the dehydration condensation agent used is usually 1 mol to 3 mol relative to 1 mol of the compound (7).

When the compound (7) is a compound in which $L^1$ is a hydroxyl group (carboxylic acid), the reaction may be performed in the presence of sulfonyl halide such as methanesulfonyl chloride and p-toluenesulfonyl chloride, and a base such as triethylamine, diisopropylethylamine, pyridine, and 4-(dimethylamino)pyridine, to obtain a target compound. The amount of the sulfonyl halide used is usually 1 mol to 3 mol relative to 1 mol of the compound (7). The amount of base used is usually 1 mol to 3 mol relative to 1 mol of the compound (7). In this case, a compound in which $L^1$ in the formula (7) is a sulfonyloxy group (mixed acid anhydride) may be isolated, before performing the subsequent reaction.

When the compound (7) is a compound in which $L^1$ is a halogen atom (acid halide), the reaction may be performed in the presence of a base to obtain a target compound. Examples of the base may include an organic base such as triethylamine and pyridine; and an inorganic base such as sodium hydroxide, sodium carbonate, and sodium hydrogen carbonate. The amount of base used is usually 1 mol to 3 mol relative to 1 mol of the compound (7).

Examples of a solvent for use in the reaction may include a chlorinated solvent, such as chloroform, and methylene chloride; an amide-based solvent, such as N-methylpyrrolidone, N,N-dimethylformamide, N,N-dimethylacetamide, and hexamethylphosphoric triamide; an ether-based solvent, such as 1,4-dioxane, cyclopentyl methyl ether, tetrahydrofuran, tetrahydropyran, and 1,3-dioxolane; a sulfur-containing solvent, such as dimethylsulfoxide, and sulfolane; an aromatic hydrocarbon-based solvent, such as benzene, toluene, and xylene; an aliphatic hydrocarbon-based solvent, such as n-pentane, n-hexane, and n-octane; an alicyclic hydrocarbon-based solvent, such as cyclopentane, and cyclohexane; and a mixed solvent of two or more types thereof.

The amount of the solvent used is not particularly limited, and may be determined in consideration of type of compound to be used, reaction scale, and the like. The specific amount of the solvent used is usually 1 g to 50 g relative to 1 g of the hydroxy compound (6).

Most of compounds (6) are publicly known substances, and may be produced by publicly known methods. For example, the compound (6) may be produced by a process shown in the following reaction formula (see International publication WO2009/042544 and The Journal of Organic Chemistry, 2011, 76, 8082-8087). A product commercially available as the compound (6) may be used with, if desired, purification.

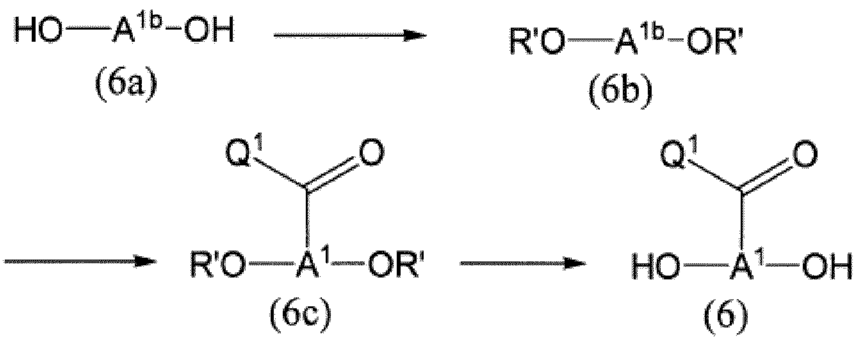

(6a) (6b)

(6c) (6)

(wherein $A^1$ and $Q^1$ have the same meanings as described above; $A^{1b}$ is a divalent aromatic group that is capable of being formylated or acylated to form $A^1$; and R' is a protecting group of a hydroxyl group, such as an alkyl group of 1 to 6 carbon atoms such as a methyl group and an ethyl group and an alkoxyalkyl group of 2 to 6 carbon atoms such as a methoxymethyl group.)

As shown in the aforementioned reaction formula, a hydroxyl group of a dihydroxy compound represented by a formula (6a) (1,4-dihydroxybenzene, 1,4-dihydroxynaphthalene, etc.) is alkylated to obtain a compound represented by a formula (6b). Subsequently, an ortho position of an OR' group is formylated or acylated by a publicly known method, to obtain a compound represented by a formula (6c). The obtained compound may be subjected to deprotection (dealkylation), to produce the compound (6) as a target.

The product commercially available as the compound (6) as it is may be used or with, if desired, purification.

Most of compounds (7) are publicly known compounds, and may be produced, for example, by appropriately bonding and modifying a plurality of publicly known compounds having a desired structure through any combination of reactions of forming an ether linkage (-O-), an ester linkage (-C(=O)-O- and -O-C(=O)-), a carbonate linkage (-O-C(=O)-O-), and an amide linkage (-C(=O)NH- and -NH-C(=O)-).

For example, when the compound (7) is a compound represented by the following formula (7') (compound (7')), the compound (7') may be produced as follows, using a dicarboxylic acid represented by a formula (9') (compound (9')).

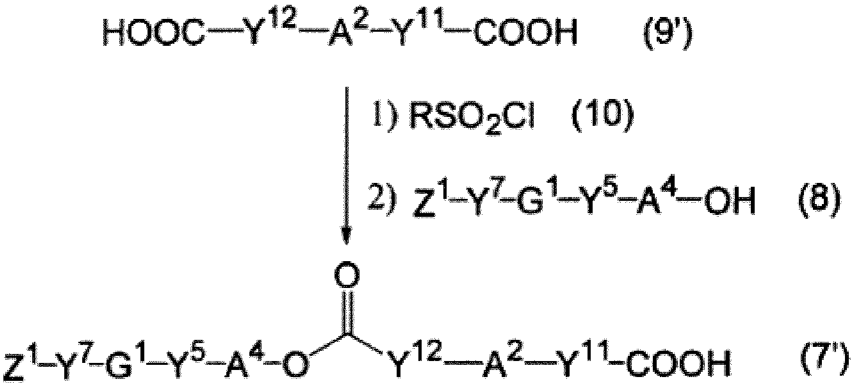

(9')
(7')

(In the formula, $Y^5$, $Y^7$, $G^1$, $Z^1$, $A^2$, $A^4$, and $Y^{11}$ have the same meanings as described above; $Y^{12}$ is a group having a structure with which -O-C(=O)-$Y^{12}$ corresponds to $Y^3$; and R is an alkyl group, such as a methyl group and an ethyl group, or an aryl group optionally having a substituent, such as a phenyl group and a p-methylphenyl group.)

The compound (9') is first reacted with sulfonyl chloride represented by a formula (10) in the presence of a base such as triethylamine or 4-(dimethylamino)pyridine. Subsequently, to the reaction mixture, a compound (8) and a base such as triethylamine or 4-(dimethylamino)pyridine are added to perform a reaction.

The amount of sulfonyl chloride used is usually 0.5 equivalents to 0.7 equivalents relative to 1 equivalent of the compound (9').

The amount of compound (8) used is usually 0.5 equivalents to 0.6 equivalents relative to 1 equivalent of the compound (9').

The amount of base used is usually 0.5 equivalents to 0.7 equivalents relative to 1 equivalent of the compound (9').

The reaction temperature is 20°C to 30°C, and the reaction time may vary depending on the reaction scale, and the like, and is several minutes to several hours.

Examples of the solvent for use in the aforementioned reaction may include those exemplified as the examples of the solvent that may be used for producing the compound (4'). Among these, an ether solvent is preferable.

The amount of the solvent used is not particularly limited, and may be determined in consideration of type of compound to be used, reaction scale, and the like. For example, the specific amount of the solvent used is usually 1 g to 50 g relative to 1 g of the hydroxy compound (9').

In any of the reactions, a usual post-treatment operation in organic synthesis chemistry may be performed after completion of the reactions. If desired, a publicly known separation and purification method such as column chromatography, recrystallization, and distillation may be performed to isolate a target compound.

The structure of the target compound may be identified by measurement such as NMR spectrometry, IR spectrometry, and mass spectrometry, and elemental analysis.

[3. Polymerization initiator]

The liquid crystal composition includes a polymerization initiator. The type of the polymerization initiator may be selected in accordance with the type of the polymerizable compound contained in the liquid crystal composition. For example, when the polymerizable compound is radically polymerizable, a radical polymerization initiator may be used. When the polymerizable compound is anionically polymerizable, an anionic polymerization initiator may be used. Furthermore, when the polymerizable compound is cationically polymerizable, a cationic polymerization initiator may be used. As the polymerization initiator, one type thereof may be solely used, and two or more types thereof may also be used in combination at any ratio.

Examples of the usable radical polymerization initiator may include: a thermal radical generator that is a compound which generates an active species capable of initiating the polymerization of a polymerizable compound by heating; and a photoradical generator that is a compound which generates an active species capable of initiating the

polymerization of a polymerizable compound by the exposure to exposure light such as visible light, ultraviolet rays (such as i rays), far-ultraviolet rays, electron rays, and X rays. Of these, a photoradical generator is suitable as the radical polymerization initiator.

Examples of the photoradical generator may include an acetophenone-based compound, a biimidazole-based compound, a triazine-based compound, an O-acyloxim-based compound, an onium salt-based compound, a benzoin-based compound, a benzophenone-based compound, an $\alpha$-diketone-based compound, a polynuclear quinone-based compound, a xanthone-based compound, a diazo-based compound, and an imide sulfonate-based compound. These compounds can generate an active radial, an active acid, or both of an active radical and an active acid, by exposure.

Specific examples of the acetophenone-based compound may include 2-hydroxy-2-methyl-1-phenylpropane-1-one, 2-methyl-1-[4-(methylthio)phenyl]-2-morpholinopropane-1-one, 2-benzyl-2-dimethylamino-1-(4-morpholinophenyl)butane-1-one, 1-hydroxycyclohexyl·phenylketone, 2,2-dimethoxy-1,2-diphenylethane-1-one, 1,2-octanedione, and 2-benzyl-2-dimethylamino-4'-morpholinobutyrophenone.

Specific examples of the biimidazole-based compound may include 2,2'-bis(2-chlorophenyl)-4,4',5,5'-tetrakis(4-ethoxycarbonylphenyl)-1,2'-biimidazole, 2,2'-bis(2-bromophenyl)-4,4',5,5'-tetrakis(4-ethoxycarbonylphenyl)-1,2'-biimidazole, 2,2'-bis(2-chlorophenyl)-4,4',5,5'-tetraphenyl-1,2'-biimidazole, 2,2'-bis(2,4-dichlorophenyl)-4,4',5,5'-tetraphenyl-1,2'-biimidazole, 2,2'-bis(2,4,6-trichlorophenyl)-4,4',5,5'-tetraphenyl-1,2'-biimidazole, 2,2'-bis(2-bromophenyl)-4,4',5,5'-tetraphenyl-1,2'-biimidazole, 2,2'-bis(2,4-dibromophenyl)-4,4',5,5'-tetraphenyl-1,2'-biimidazole, and 2,2'-bis(2,4,6-tribromophenyl)-4,4',5,5'-tetraphenyl-1,2'-biimidazole.

Specific examples of the triazine-based compound may include a triazine-based compound having a halomethyl group such as 2,4,6-tris(trichloromethyl)-s-triazine, 2-methyl-4,6-bis(trichloromethyl)-s-triazine, 2-[2-(5-methylfuran-2-yl)ethenyl]-4,6-bis(trichloromethyl)-s-triazine, 2-[2-(furan-2-yl)ethenyl]-4,6-bis(trichloromethyl)-s-triazine, 2-[2-(4-diethylamino-2-methylphenyl)ethenyl]-4,6-bis(trichloromethyl)-s-triazine, 2-[2-(3,4-dimethoxyphenyl)ethenyl]-4,6-bis(trichloromethyl)-s-triazine, 2-(4-methoxyphenyl)-4,6-bis(trichloromethyl)-s-triazine, 2-(4-ethoxystyryl)-4,6-bis(trichloromethyl)-s-triazine, and 2-(4-n-butoxyphenyl)-4,6-bis(trichloromethyl)-s-triazine.

Specific examples of the O-acyloxim-based compound may include 1-[4-(phenylthio)phenyl]-heptane-1,2-dione 2-(O-benzoyloxim), 1-[4-(phenylthio)phenyl]-octane-1,2-dione 2-(O-benzoyloxim), 1-[4-(benzoyl)phenyl]-octane-1,2-dione 2-(O-benzoyloxim), 1-[9-ethyl-6-(2-methylbenzoyl)-9H-carbazole-3-yl]-ethanone 1-(O-acetyloxim), 1-[9-ethyl-6-(3-methylbenzoyl)-9H-carbazole-3-yl]-ethanone 1-(O-acetyloxim), 1-(9-ethyl-6-benzoyl-9H-carbazole-3-yl)-ethanone 1-(O-acetyloxim), ethanone-1-[9-ethyl-6-(2-methyl-4-tetrahydrofuranylbenzoyl)-9.H.-carbazole-3-yl]-1-(O-acetyloxim), ethanone-1-[9-ethyl-6-(2-methyl-4-tetrahydropyranylbenzoyl)-9.H.-carbazole-3-yl]-1-(O-acetyloxim), ethanone-1-[9-ethyl-6-(2-methyl-5-tetrahydrofuranylbenzoyl)-9.H.-carbazole-3-yl]-1-(O-acetyloxim), ethanone-1-[9-ethyl-6-(2-methyl-5-tetrahydropyranylbenzoyl)-9.H.-carbazole-3-yl]-1-(O-acetyloxim), ethanone-1-[9-ethyl-6-{2-methyl-4-(2,2-dimethyl-1,3-dioxolanyl)benzoyl}-9.H.-carbazole-3-yl]-1-(O-acetyloxim), ethanone-1-[9-ethyl-6-(2-methyl-4-tetrahydrofuranylmethoxybenzoyl)-9.H.-carbazole-3-yl]-1-(O-acetyloxim), ethanone-1-[9-ethyl-6-(2-methyl-4-tetrahydropyranylmethoxybenzoyl)-9.H.-carbazole-3-yl]-1-(O-acetyloxim), ethanone-1-[9-ethyl-6-(2-methyl-5-tetrahydrofuranylmethoxybenzoyl)-9.H.-carbazole-3-yl]-1-(O-acetyloxim), ethanone,1-[9-ethyl-6-(2-methylbenzoyl)-9H-carbazole-3-yl]-1-(O-acetyloxim), ethanone-1-[9-ethyl-6-(2-methyl-5-tetrahydropyranylmethoxybenzoyl)-9.H.-carbazole-3-yl]-1-(O-acetyloxim), and ethanone-1-[9-ethyl-6-{2-methyl-4-(2,2-dimethyl-1,3-dioxolanyl)methoxybenzoyl}-9.H.-carbazole-3-yl]-1-(O-acetyloxim).

As the photoradical generator, a commercially available product may be used as it is. Specific examples may include trade name: Irgacure 907, trade name: Irgacure 184, trade name: Irgacure 369, trade name: Irgacure 651, trade name: Irgacure 819, trade name: Irgacure 907, trade name: Irgacure 379, trade name: Irgacure OXE02, and trade name: Irgacure OXE04 manufactured by BASF, and trade name: Adeka Optomer N1919 manufactured by Adeka Corporation.

Examples of the anionic polymerization initiator may include: an alkyl lithium compound; a monolithium salt or monosodium salt such as biphenyl, naphthalene, and pyrene; and a multifunctional initiator such as dilithium salts and trilithium salts.

Examples of the cationic polymerization initiator may include: a protonic acid such as sulfuric acid, phosphoric acid, perchloric acid, and trifluoromethanesulfonic acid; a Lewis acid such as boron trifluoride, aluminum chloride, titanium tetrachloride, and tin tetrachloride; and an aromatic onium salt or a combined system of aromatic onium salt and a reducer.

The amount of the polymerization initiator is preferably 0.1 part by weight or more, and more preferably 0.5 part by weight or more, and is preferably 30 parts by weight or less, and more preferably 10 parts by weight or less, relative to 100 parts by weight of the reverse distribution liquid crystal compound. When the amount of the polymerization initiator falls within the aforementioned range, polymerization can be efficiently promoted.

[4. Optional component which liquid crystal composition may include]

The liquid crystal composition may further include an optional component in combination with the reverse distribution liquid crystal compound and the polymerization initiator. As the optional component, one type thereof may be solely used, and two or more types thereof may also be used in combination.

The liquid crystal composition preferably includes, for example, a surfactant containing a fluorine atom in its molecule from the viewpoint of stably obtaining a desired liquid crystal cured layer. In the following description, the surfactant containing a fluorine atom in its molecule is sometimes appropriately referred to as a "fluorine-based surfactant".

The fluorine-based surfactant particularly preferably has a specific range of 1-octanol/water partition coefficients. In the following description, the 1-octanol/water partition coefficient is sometimes appropriately called "logP". The specific range of the logP of the fluorine-based surfactant is preferably 3.5 or more. From the viewpoint of enabling the effective suppression of the occurrence of orientation defects in the liquid crystal cured layer, it is more preferably 4.8 or more, and further preferably 5.3 or more. Also, it is preferably 6.7 or less, and more preferably 6.3 or less. When the logP of the fluorine-based surfactant is not more than the upper limit of the aforementioned range, there can be easily obtained the specific structure of the liquid crystal cured layer in which the tilt angles of the molecules of the liquid crystal compound are discontinuously different in the thickness direction.

The logP of the fluorine-based surfactant may be measured by the following measurement method.

A sample solution containing 1% by weight of the fluorine-based surfactant is prepared. The obtained solution is subjected to HPLC/ELSD analysis (high performance liquid chromatography/evaporative light scattering detection analysis) approximately in accordance with JIS 7260-117:2006 {Measurement of partition coefficient (1-octanol/water)-high performance liquid chromatography} to measure an elution time (r.t.). Meanwhile, standard compounds having known logP values, which are described in JIS 7260-117:2006, are subjected to HPLC/ELSD analysis by the same operation as that for the aforementioned fluorine-based surfactant, to measure elution time (r.t.). On the basis of the measurement results of the standard compounds, a calibration curve indicating the relationship between the elution time and logP is created. Thereafter, the elution time measured for the fluorine-based surfactant is fitted to the aforementioned calibration curve to thereby obtain the logP of the fluorine-based surfactant.

The specific condition to be adopted for this measurement method may be the condition detailed in the description of Examples.

The fluorine-based surfactant may contain a fluoroalkyl group. The fluoroalkyl group is preferably a perfluoroalkyl group, particularly preferably a $-C_6F_{13}$ group, from the viewpoint of significantly obtaining desired effects of the present invention.

The fluorine-based surfactant is preferably a nonionic surfactant. When the fluorine-based surfactant is a nonionic surfactant which does not contain an ionic group, the surface state and orientation properties of the liquid crystal cured layer can particularly be made favorable.

The fluorine-based surfactant may or may not have polymerizability. Since the fluorine-based surfactant having polymerizability can be polymerized in the step of curing the layer of the liquid crystal composition, it is usually contained in part of the molecule of the polymer in the liquid crystal cured layer.

Examples of the fluorine-based surfactant may include Surflon series (such as S420) manufactured by AGC Seimi Chemical Co., Ltd., Ftergent series (such as 251, FTX-212M, FTX-215M, and FTX-209) manufactured by Neos Company limited., and Megaface series (such as F-444) manufactured by DIC Corporation. As the fluorine-based surfactant, one type thereof may be solely used, and two or more types thereof may also be used in combination at any ratio.

The amount of the fluorine-based surfactant is preferably 0.10 part by weight or more, and more preferably 0.12 part by weight or more, and is preferably 0.50 part by weight or less, and more preferably 0.30 part by weight or less, relative to 100 parts by weight of the reverse distribution liquid crystal compound. When the amount of the fluorine-based surfactant falls within the aforementioned range, there can be easily achieved a liquid crystal cured layer in which the tilt angles of the molecules of the liquid crystal compound are discontinuously different in the thickness direction.

The liquid crystal composition may include, for example, a solvent. The solvent is preferably a solvent that can dissolve the reverse distribution liquid crystal compound. As such a solvent, an organic solvent is usually used. Examples of the organic solvent may include: a ketone solvent such as cyclopentanone, cyclohexanone, methyl ethyl ketone, acetone, and methyl isobutyl ketone; an acetic acid ester solvent such as butyl acetate and amyl acetate; a halogenated hydrocarbon solvent such as chloroform, dichloromethane, and dichloroethane; an ether solvent such as 1,4-dioxane, cyclopentyl methyl ether, tetrahydrofuran, tetrahydropyran, 1,3-dioxolane, and 1,2-dimethoxyethane; and an aromatic hydrocarbon-based solvent such as toluene, xylene, and mesitylene. As the solvent, one type thereof may be solely used, and two or more types thereof may also be used in combination at any ratio.

The boiling point of the solvent is preferably 60 to 250°C, more preferably 60 to 150°C, from the viewpoint of excellent handleability.

The amount of the solvent is preferably 200 parts by weight or more, more preferably 250 parts by weight or more, and particularly preferably 300 parts by weight or more, and is preferably 650 parts by weight or less, more preferably 550 parts by weight or less, and particularly preferably 450 parts by weight or less, relative to 100 parts by weight of the reverse distribution liquid crystal compound. By setting the amount of the solvent equal to or more than the lower limit value of the aforementioned range, the occurrence of unintended substances can be suppressed. By setting the amount thereof equal to or less than the upper limit value of the aforementioned range, drying loads can be reduced.

The liquid crystal composition may include, for example, an additive for adjusting the residue content viscosity of the test composition. When an appropriate type of additive is used in an appropriate amount, the residue content viscosity of the test composition under the condition of the temperature that is the same as the temperature of the layer of the liquid crystal composition in the step of giving orientation to the liquid crystal compound can be reduced, so that it can be adjusted to 800 cP or less. However, the type and amount of an additive vary depending on factors such as the type and amount of the reverse distribution liquid crystal compound, and thus cannot be univocally defined. Therefore, it is preferable to experimentally determine the type and amount of the additive.

The liquid crystal composition may include, for example, an optional liquid crystal compound other than the reverse distribution liquid crystal compound. When the type and amount of an optional liquid crystal compound are appropriate, the optional liquid crystal compound may function as an additive for adjusting the residue content viscosity of the test composition in some cases. As the optional liquid crystal compound, one type thereof may be solely used, and two or more types thereof may also be used in combination at any ratio.

An example of the optional liquid crystal compound to be used may be a forward distribution liquid crystal compound. Herein, the forward distribution liquid crystal compound refers to a liquid crystal compound capable of expressing a birefringence with forward wavelength distribution. The liquid crystal compound capable of expressing a birefringence with forward wavelength distribution refers to a liquid crystal compound that expresses a birefringence with forward wavelength distribution when a layer of the liquid crystal compound is formed and the liquid crystal compound is oriented therein. Whether or not the liquid crystal compound expresses a birefringence with forward wavelength distribution can be usually confirmed by checking whether or not the layer of the liquid crystal compound exhibits a birefringence with forward wavelength distribution when the liquid crystal compound is homogeneously oriented.

The birefringence with forward wavelength distribution refers to a birefringence in which a birefringence $\Delta n(450)$ at a wavelength of 450 nm and a birefringence $\Delta n(550)$ at a wavelength of 550 nm satisfy the following formula (N2). As to the liquid crystal compound capable of expressing such a birefringence with forward wavelength distribution, the longer the measurement wavelength, the smaller the birefringence the compound can usually express.

$$\Delta n(450) > \Delta n\ (550) \qquad (N2)$$

The amount of the optional liquid crystal compound relative to 100 parts by weight in total of the reverse distribution liquid crystal compound and the optional liquid crystal compound is preferably 20 parts by weight or less, more preferably 15 parts by weight or less, and particularly preferably 12 parts by weight or less. When the amount of the optional liquid crystal compound falls within the aforementioned range, there can be easily obtained a liquid crystal cured layer having a retardation with reverse wavelength distribution.

Further examples of the optional component may include: metal; a metal complex; a metal oxide such as a titanium oxide; a coloring agent such as a dye and a pigment; a light-emitting material such as a fluorescent material and a phosphorescent material; a leveling agent; a thixotropic agent; a gelator; polysaccharides; an ultraviolet absorber; an infrared absorber; an antioxidant; and an ion exchange resin. The amount of each of these components may be 0.1 to 20 parts by weight relative to 100 parts by weight in total of the reverse distribution liquid crystal compound.

[5. Step of forming layer of liquid crystal composition]

In the method for producing a liquid crystal cured film, the step of forming a layer of a liquid crystal composition is performed. Usually, the layer of a liquid crystal composition is formed on an appropriate support surface.

As the support surface, any surface which can support the layer of a liquid crystal composition may be used. From the viewpoint of obtaining a favorable surface state of the liquid crystal cured layer, a flat surface without concave and convex portions is usually used as this support surface. From the viewpoint of enhancing the productivity of the liquid crystal cured layer, a surface of a long-length substrate is preferably used as the support surface. As used herein, the term "long-length" refers to a shape with the length that is 5 times or more the width, and preferably a shape with the length that is 10 times or more the width, and specifically refers to a shape of a film having a length that allows the film to be wound up into a roll shape for storage or transportation.

As a substrate, a resin film or a glass plate is usually used. In particular, as described later, when orientation treatment is performed at high temperatures, a substrate which can withstand the temperatures is preferably selected. As the resin, thermoplastic resins are usually used. Of these, a resin having a positive intrinsic birefringence value is preferable as the resin from the viewpoint of a high orientation regulating force, high mechanical strength, and low costs. Furthermore, a resin including an alicyclic structure-containing polymer, such as a norbornene-based resin, is preferably used, because it is excellent in transparency, low hygroscopicity, size stability, and lightweight properties. A suitable example as a trade name of the resin contained in the substrate may be "ZEONOR" manufactured by ZEON Corporation

as a norbornene-based resin.

For promoting the orientation of the liquid crystal compound in the layer of the liquid crystal composition, it is preferable that the surface of the substrate as the support surface has been subjected to a treatment for imparting an orientation regulating force . The orientation regulating force refers to the properties of the support surface that is capable of causing orientation of the liquid crystal compound in the liquid crystal composition. Examples of the treatment for imparting an orientation regulating force to the support surface may include a photo-orientation treatment, a rubbing treatment, an oriented film formation treatment, an ion beam orientation treatment, and a stretch treatment.

In the step of forming a layer of a liquid crystal composition, the prepared liquid crystal composition is usually fluid. Therefore, a liquid crystal composition is usually applied onto a support surface to form a layer of the liquid crystal composition. Examples of the method for applying the liquid crystal composition may include a curtain coating method, an extrusion coating method, a roll coating method, a spin coating method, a dip coating method, a bar coating method, a spray coating method, a slide coating method, a print coating method, a gravure coating method, a die coating method, a gap coating method, and a dipping method.

[6. Step of giving orientation to liquid crystal compound]

After the layer of the liquid crystal composition has been formed, the step of giving orientation to the liquid crystal compound such as the reverse distribution liquid crystal compound contained in the layer of the liquid crystal composition is performed. By this step, in the in-plane direction of the layer of the liquid crystal composition, the liquid crystal compound is usually oriented in a direction corresponding to the orientation regulating force of the support surface. In the thickness direction of the layer, the liquid crystal compound is oriented such that the tilt angles are discontinuously different.

The step of giving orientation to the liquid crystal compound is performed by adjusting the layer of the liquid crystal composition to the same temperature condition as the temperature condition under which the residue content viscosity of the test composition falls within a specific range. The specific range of the residue content viscosity is usually 800 cP (centipoise) or less, preferably 600 cP or less, more preferably 400 cP or less, and further preferably 200 cP or less. When the liquid crystal compound in the layer of the liquid crystal composition is oriented under the same temperature condition as the temperature condition under which the residue content viscosity of the test composition becomes low in this manner, there can be obtained a liquid crystal cured layer in which the tilt angles of the molecules of the liquid crystal compound are discontinuously different in the thickness direction. The lower limit of the residue content viscosity is preferably 5 cP or more, more preferably 10 cP or more, from the viewpoint of obtaining a liquid crystal cured layer having a desired thickness.

In general, in the step of giving orientation to the liquid crystal compound contained in the layer of the liquid crystal composition, the temperature of the layer of the liquid crystal composition is adjusted to the liquid crystallization temperature of the liquid crystal compound or higher. At such temperatures, a volatile component such as a solvent contained in the liquid crystal composition usually evaporates, so that a solid content remains. From the viewpoint of avoiding the deterioration of the substrate due to high temperatures and reducing energy costs, it has been technical common sense that the temperature during orientation is set to be as low as possible in a prior art method for forming a liquid crystal cured layer. Therefore, under the temperature condition during orientation treatment in prior art, the viscosity of the residual component of the test composition being the liquid crystal composition from which the polymerization initiator is omitted had a tendency to be at a high level.

On the other hand, in the present invention, the temperature condition during orientation is purposely set to be the same temperature condition as the temperature condition under which the viscosity of the residual component of the test composition being the liquid crystal composition from which the polymerization initiator is omitted can be lowered. By giving orientation to the liquid crystal compound contained in the layer of the liquid crystal composition under this temperature condition, the present invention achieves the unexpected effect of obtaining a liquid crystal cured layer in which the tilt angles of the molecules of the liquid crystal compound are discontinuously different in the thickness direction.

Examples of the method for confining in the aforementioned range the residue content viscosity of the test composition under the condition of the temperature that is the same as the temperature of the layer of the liquid crystal composition in the step of giving orientation to the liquid crystal compound may include the following methods (A) and (B).

(A) Appropriately adjusting the temperature of the layer of the liquid crystal composition in the step of giving orientation to the liquid crystal compound.
(B) Appropriately adjusting the constituent composition of the liquid crystal composition.

In the method (A) described above, the temperature of the layer of the liquid crystal composition is usually sufficiently elevated so that the residue content viscosity of the test composition under the condition of the temperature that is the same as that temperature of the layer is lowered and adjusted to be within the aforementioned range. The

degree of elevation of the temperature from the liquid crystallization temperature that enables adjustment of the residue content viscosity of the test composition to the aforementioned range may vary depending on the type of the reverse distribution liquid crystal compound and the constituent composition of the liquid crystal composition. Further, in prior art, a general relationship between a temperature of a composition containing a liquid crystal compound and the residue content viscosity of the composition at the temperature is unknown. Therefore, it is preferable that the setting of the appropriate temperature of the layer of the liquid crystal composition in the step of giving orientation to the liquid crystal compound is experimentally determined.

In the method (B), an appropriate type and amount of an additive is usually combined with the reverse distribution liquid crystal compound as a component contained in the liquid crystal composition, so that the residue content viscosity of the test composition containing the additive is lowered and adjusted to become within the aforementioned range. The type and amount of an additive used for adjusting the residue content viscosity of the test composition to the aforementioned range may vary depending on the type of the reverse distribution liquid crystal compound and the constituent composition of the liquid crystal composition. Further, in prior art, the constituent composition of a composition containing a liquid crystal compound generally required for adjusting the residue content viscosity of the composition is unknown. Therefore, it is preferable that the type and amount of the additive for adjusting the residue content viscosity of the test composition are experimentally determined.

The residue content viscosity of the test composition under the condition of the temperature that is the same as the temperature of the layer of the liquid crystal composition in the step of giving orientation to the liquid crystal compound may be measured by the following method.

A test composition, which is identical with the liquid crystal composition except that the polymerization initiator is omitted therefrom, is prepared. This test composition is concentrated under reduced pressure by a rotary evaporator to remove the solvent. Thus, a residual component is obtained. The viscosity of this residual component is previously measured while the measurement temperature is changed, so that information on measurement temperatures and viscosities at the measurement temperatures is obtained. Hereinafter, this information is appropriately referred to as "temperature-viscosity information". From this "temperature-viscosity information", the viscosity at the temperature of the layer of the liquid crystal composition in the step of giving orientation to the liquid crystal compound is read as the residue content viscosity.

In the step of giving orientation to the liquid crystal compound, an orientation treatment of adjusting the temperature condition of the layer of the liquid crystal composition to the same temperature condition as the temperature condition under which the residue content viscosity of the test composition can be confined within the aforementioned range is usually performed. The specific temperature of the layer of the liquid crystal composition during the orientation treatment is appropriately set within the range that is equal to or higher than the liquid crystallization temperature of the reverse distribution liquid crystal compound, and particularly preferably a temperature that is lower than the glass transition temperature of the resin contained in the substrate. Accordingly, the occurrence of the distortion of the substrate due to the orientation treatment can be suppressed.

The step of giving orientation to the liquid crystal compound is usually performed in an oven. In this case, the set temperature of an oven and the temperature of the layer of the liquid crystal composition placed in the oven may be different in some cases. In this case, it is preferable to measure the temperature of the layer of the liquid crystal composition placed in the oven at each of a variety of oven set temperatures, and record the measured temperature. Hereinafter, this recorded information on set temperatures of an oven and temperatures of the layer of the liquid crystal composition placed in the oven at the set temperatures is appropriately referred to as "set temperature-layer temperature information". By using this "set temperature-layer temperature information", the temperature of the layer of the liquid crystal composition placed in the oven can be easily obtained from the oven set temperature.

When the orientation treatment is performed, the temperature of the layer of the liquid crystal composition is usually retained at the aforementioned temperature condition for a specific period of time. The retained time may be optionally set within a range in which a desired liquid crystal cured layer can be obtained, and may be, for example, 30 seconds to 5 minutes.

When the layer of the liquid crystal composition containing the reverse distribution liquid crystal compound is oriented under the same temperature condition as a temperature condition under which the residue content viscosity of the test composition can be confined within the aforementioned range, the orientation state of the molecules of the liquid crystal compound such as the reverse distribution liquid crystal compound becomes uniform in the in-plane direction, but becomes discontinuously different in the thickness direction. Specifically, in a portion close to the support surface among portions of the layer of the liquid crystal composition, the molecules of the liquid crystal compound are usually uniformly oriented in a direction parallel to or almost parallel to the support surface. In a portion close to the interface opposite the support surface (usually, the air interface of the layer of the liquid crystal composition) among portions of the layer of the liquid crystal composition, the molecules of the liquid crystal compound are usually uniformly oriented in a direction perpendicular to or almost perpendicular to the support surface. Furthermore, in a middle portion between the aforementioned two portions among portions of the layer of the liquid crystal composition, the molecules of the liquid

crystal compound are usually uniformly oriented in a direction that is neither parallel nor perpendicular to the support surface. Since the orientation states of the aforementioned portions are discontinuously different in this manner, there can be obtained a layer of the liquid crystal composition in which the tilt angles of the molecules of the liquid crystal compound are discontinuously different in the thickness direction.

[7. Step of curing layer of liquid crystal composition]

After the liquid crystal compound has been oriented, the step of curing the layer of the liquid crystal composition to obtain a liquid crystal cured layer is performed. In this step, usually a part or the entirety of the liquid crystal compound such as the reverse distribution liquid crystal compound is polymerized, so that the layer of the liquid crystal composition is cured. During the polymerization, the liquid crystal compound is usually polymerized while maintaining its molecular orientation. Therefore, the aforementioned polymerization can fix the orientation state of the liquid crystal compound having been contained in the liquid crystal composition before polymerization, and thereby a desired liquid crystal cured layer can be obtained.

As a method for polymerizing the liquid crystal compound, a method which fits the properties of the components contained in the liquid crystal composition may be selected. Examples of the polymerization method may include a method of performing irradiation with active energy rays and a thermopolymerization method. Of these, a method of performing irradiation with active energy rays is preferable, because heating is not required, and a polymerization reaction can proceed at room temperature. Herein, the active energy rays for irradiation may include light such as visible light, ultraviolet rays, and infrared rays as well as any energy rays such as electron beams.

Of these, a method of irradiating with light such as ultraviolet rays is preferable, because the operation is simple. The temperature during the irradiation with ultraviolet rays is preferably not higher than the glass transition temperature of the substrate, and preferably 150°C or lower, more preferably 100°C or lower, and particularly preferably 80°C or lower. The lower limit of the temperature during the irradiation with ultraviolet rays may be 15°C or higher. The irradiation intensity of ultraviolet rays is preferably 0.1 $mW/cm^2$ or more, and more preferably 0.5 $mW/cm^2$ or more, and is preferably 10000 $mW/cm^2$ or less, and more preferably 5000 $mW/cm^2$ or less. The irradiation amount of ultraviolet rays is preferably 0.1 $mJ/cm^2$ or more, and more preferably 0.5 $mJ/cm^2$ or more, and is preferably 10000 $mJ/cm^2$ or less, and more preferably 5000 $mJ/cm^2$ or less.

[8. Optional step]

By the aforementioned production method, a liquid crystal cured layer formed on a support surface may be obtained. When the liquid crystal cured layer formed on the substrate is obtained, the multilayer film including the substrate and the liquid crystal cured layer may be used as the liquid crystal cured film.

Alternatively, the method for producing the liquid crystal cured film may include a step of peeling the liquid crystal cured layer from the support surface. In this case, the liquid crystal cured layer itself may be used as the liquid crystal cured film.

Furthermore, the method for producing the liquid crystal cured film may include a step of transferring the liquid crystal cured layer formed on the substrate onto an optional film layer. Therefore, for example, the method for producing the liquid crystal cured film may include a step of bonding the liquid crystal cured layer formed on the substrate with an optional film layer, and thereafter peeling the substrate if necessary to obtain a liquid crystal cured film containing the liquid crystal cured layer and the optional film layer. For this bonding, an appropriate tackiness agent or adhesive agent may be used. In this case, a liquid crystal cured film containing the liquid crystal cured layer and the optional film layer can be obtained.

According to the aforementioned production method, a long-length liquid crystal cured film can be obtained by the use of a long-length substrate. Such a long-length liquid crystal cured film can be continuously produced, and is excellent in productivity. In addition, since bonding with another film can be performed by roll-to-roll, productivity is also excellent in this regard. Usually, the long-length liquid crystal cured film is wound up to be stored and transported in a roll state.

[9. Liquid crystal cured film]

By the aforementioned production method, there can be obtained a liquid crystal cured film including a liquid crystal cured layer having a retardation with reverse wavelength distribution in which tilt angles of molecules of a liquid crystal compound are discontinuously different in a thickness direction.

FIG. 1 is a cross-sectional view schematically illustrating a cross section of a liquid crystal cured film 10 according to an embodiment of the present invention, cut along a plane parallel to the thickness direction thereof.

As illustrated in FIG. 1, the liquid crystal cured film 10 is a film including a liquid crystal cured layer 100. Although

FIG. 1 illustrates the liquid crystal cured film 10 which includes only the liquid crystal cured layer 100, the liquid crystal cured film 10 may include an optional layer (not illustrated) in combination with the liquid crystal cured layer 100.

The liquid crystal cured layer 100 is a layer formed of a cured product of the liquid crystal composition containing the liquid crystal compound such as the reverse distribution liquid crystal compound, and includes a first layer 110, a second layer 120, and a third layer 130 in this order in the thickness direction. When produced by the aforementioned production method, the liquid crystal cured layer usually includes the first layer, the second layer and the third layer in this order from the support surface side. Since the liquid crystal cured layer 100 as well as the first layer 110, the second layer 120, and the third layer 130 included in the liquid crystal cured layer 100 are formed of a cured product of the liquid crystal composition, they contain the liquid crystal compound.

A part or the entirety of the liquid crystal compound included in the liquid crystal cured layer 100 may be in a fixed orientation state. The liquid crystal compound can be usually polymerized to become a polymer while maintaining the orientation state of the liquid crystal compound. Therefore, an example of the liquid crystal compound in a fixed orientation state may be a polymerized liquid crystal compound. Consequently, the term "liquid crystal compound in a fixed orientation state" encompasses a polymer of the liquid crystal compound. When the aforementioned liquid crystal composition including the reverse distribution liquid crystal compound is used to produce a liquid crystal cured layer 100, the liquid crystal cured layer 100 as well as the first layer 110, the second layer 120, and the third layer 130 included in the liquid crystal cured layer 100 contain the reverse distribution liquid crystal compound which may be in a fixed orientation state.

The first layer 110 and the second layer 120 are usually in direct contact with each other without an optional layer interposed therebetween. Also, the second layer 120 and the third layer 130 are usually in direct contact with each other without an optional layer interposed therebetween. Therefore, the liquid crystal cured layer 100 is usually a layer having a three-layer structure which includes only the first layer 110, the second layer 120, and the third layer 130, as illustrated in FIG. 1.

First tilt angle formed by the molecules of the liquid crystal compound contained in the first layer 110 relative to the layer plane is usually constant in the first layer 110.

Also, second tilt angle formed by the molecules of the liquid crystal compound contained in the second layer 120 relative to the layer plane is usually constant in the second layer 120. Furthermore, the second tilt angle is discontinuously different from the first tilt angle.

Also, third tilt angle formed by the molecules of the liquid crystal compound contained in the third layer 130 relative to the layer plane is usually constant in the third layer 130. Furthermore, the third tilt angle is discontinuously different from the first tilt angle and the second tilt angle.

Since the tilt angles of the molecules of the liquid crystal compound are discontinuously different among the first layer 110, the second layer 120, and the third layer 130 in this manner, the liquid crystal cured layer 100 including these layers can have a specific structure in which the tilt angles of the molecules of the liquid crystal compound are discontinuously different in the thickness direction.

Herein, when a certain tilt angle and another tilt angle are discontinuously different, it indicates that a difference in a tilt angle between those tilt angles is 10° or more.

The tilt angles (the first tilt angle, the second tilt angle, and the third tilt angle) of the molecules of the liquid crystal compound in the respective layers included in the liquid crystal cured layer 100, such as the first layer 110, the second layer 120, and the third layer 130, may be measured by the following measurement method.

The liquid crystal cured layer 100 is embedded in an epoxy resin to prepare a sample piece. This sample piece is sliced in parallel to the thickness direction of the liquid crystal cured layer 100 using a microtome to obtain an observation sample. The slicing is performed such that the in-plane slow axis direction of the liquid crystal cured layer 100 and the cross section become parallel. After that, the observation sample is placed on a stage of a polarization microscope, and a cross section having appeared by the slicing is observed while the stage is rotated. From the rotation angles of the stage at extinction positions for the first layer 110, the second layer 120, and the third layer 130 of the liquid crystal cured layer 100 having appeared on the cross section, the tilt angles of the molecules of the liquid crystal compound contained in the first layer 110, the second layer 120, and the third layer 130 can be measured.

Also, whether or not the tilt angles of the molecules of the liquid crystal compound in each of the first layer 110, the second layer 120, and the third layer 130 are constant may be determined by the following determination method.

The liquid crystal cured layer 100 is embedded in an epoxy resin to prepare a sample piece. This sample piece is sliced in parallel to the thickness direction of the liquid crystal cured layer 100 using a microtome to obtain an observation sample. The slicing is performed such that the in-plane slow axis direction of the liquid crystal cured layer 100 and the cross section become parallel. After that, a cross section having appeared by slicing is observed through a polarization microscope. This observation is performed by inserting a wave plate between the observation sample and the objective lens of the polarization microscope to observe an image which exhibits a color corresponding to the retardation of the observation sample. In the observed image, each portion of the liquid crystal cured layer exhibits a color corresponding to the tilt angle of the molecules of the liquid crystal compound in that portion. When the observed color of the first layer

110 is identical at every position in the first layer 110, it can be determined that the tilt angle (first tilt angle) of the molecules of the liquid crystal compound contained in the first layer 110 is constant. When the observed color of the second layer 120 is identical at every position in the second layer 120, it can be determined that the tilt angle (second tilt angle) of the molecules of the liquid crystal compound contained in the second layer 120 is constant. Furthermore, when the observed color of the third layer 130 is identical at every position in the third layer 130, it can be determined that the tilt angle (third tilt angle) of the molecules of the liquid crystal compound contained in the third layer 130 is constant.

As a specific example, the present inventors have observed in an experiment that the first layer 110 uniformly exhibited yellow, the second layer 120 uniformly exhibited reddish purple, and the third layer 130 uniformly exhibited blue, and accordingly confirmed that the tilt angle of the molecules of the liquid crystal compound in each of the first layer 110, the second layer 120, and the third layer 130 was constant.

The degree of each of the first tilt angle, the second tilt angle, and the third tilt angle may be appropriately set in accordance with required optical properties of the liquid crystal cured layer 100 depending on the use applications of the liquid crystal cured film 10. Specific suitable ranges thereof may be as follows.

The first tilt angle is preferably 0° or more, and is preferably 20° or less, and more preferably 10° or less. The first layer 110 having the first tilt angle within such a range may be usually obtained in the aforementioned method for producing the liquid crystal cured film as a layer on the support surface side.

The second tilt angle is preferably 20° or more, and is preferably 70° or less, and more preferably 60° or less.

The difference between the first tilt angle and the second tilt angle is preferably 10° or more, more preferably 15° or more, and particularly preferably 20° or more, and is preferably 70° or less, and more preferably 60° or less.

The third tilt angle is preferably 70° or more, and more preferably 80° or more, and is preferably 90° or less. The third layer 130 having the third tilt angle within such a range may be usually obtained in the aforementioned method for producing the liquid crystal cured film as a layer on the interface side that is opposite to the support surface.

The difference between the second tilt angle and the third tilt angle is preferably 10° or more, more preferably 15° or more, and particularly preferably 20° or more, and is preferably 70° or less, and more preferably 60° or less.

The thickness of each of the first layer 110, the second layer 120, and the third layer 130 may be appropriately set in accordance with the required optical properties of the liquid crystal cured layer 100 depending on the use applications of the liquid crystal cured film 10. Specific suitable ranges thereof may be as follows.

The ratio of thickness of the first layer 110 relative to the total thickness 100% of the first layer 110, the second layer 120, and the third layer 130 is preferably 14% or more, and more preferably 18% or more, and is preferably 66% or less.

The ratio of thickness of the second layer 120 relative to the total thickness 100% of the first layer 110, the second layer 120, and the third layer 130 is preferably 1% or more, and is preferably 80% or less, and more preferably 64% or less.

The ratio of thickness of the third layer 130 relative to the total thickness 100% of the first layer 110, the second layer 120, and the third layer 130 is preferably 6% or more, and more preferably 18% or more, and is preferably 33% or less.

The thickness of each of the layers included in the liquid crystal cured layer 100, such as the first layer 110, the second layer 120, and the third layer 130, may be measured by the following measurement method.

The liquid crystal cured layer 100 is embedded in an epoxy resin to prepare a sample piece. This sample piece is sliced in parallel to the thickness direction of the liquid crystal cured layer 100 using a microtome to obtain an observation sample. The slicing is performed such that the in-plane slow axis direction of the liquid crystal cured layer 100 and the cross section become parallel. After that, a cross section having appeared by the slicing may be observed through a polarization microscope to measure the thickness of each of the first layer 110, the second layer 120, and the third layer 130.

Since the liquid crystal cured layer 100 is formed of a cured product of the liquid crystal composition containing the reverse distribution liquid crystal compound, the layer 100 usually has a retardation with reverse wavelength distribution. Herein, usually the retardation with reverse wavelength distribution refers to a retardation in which a retardation Re(450) at a wavelength of 450 nm and a retardation Re(550) at a retardation wavelength of 550 nm satisfy the following formula (N3). When the liquid crystal cured layer 100 has a retardation with reverse wavelength distribution, it can uniformly exert its function in a wide wavelength range in optical applications such as a 1/4 wave plate and a 1/2 wave plate.

$$Re(450) < Re(550) \quad (N3)$$

The specific range of the retardation of the liquid crystal cured layer 100 may be optionally set depending on the use applications of the liquid crystal cured layer. For example, when the liquid crystal cured layer 100 is desired to function as a 1/4 wave plate, the retardation Re(590) of the liquid crystal cured layer 100 at a measurement wavelength of 590 nm is preferably 80 nm or more, more preferably 100 nm or more, and particularly preferably 120 nm or more,

and is preferably 190 nm or less, more preferably 170 nm or less, and particularly preferably 160 nm or less. For example, when the liquid crystal cured layer 100 is desired to function as a 1/2 wave plate, the retardation Re(590) of the liquid crystal cured layer 100 at a measurement wavelength of 590 nm is preferably 245 nm or more, more preferably 265 nm or more, and particularly preferably 270 nm or more, and is preferably 320 nm or less, more preferably 300 nm or less, and particularly preferably 295 nm or less.

Since the first tilt angle, the second tilt angle, and the third tilt angle are different, the orientation direction of the molecules of the liquid crystal compound contained in the first layer 110, the orientation direction of the molecules of the liquid crystal compound contained in the second layer 120, and the orientation direction of the molecules of the liquid crystal compound contained in the third layer 130 are non-parallel in the three dimensional view. However, in the in-plane direction of the liquid crystal cured layer 100, the orientation direction of the molecules of the liquid crystal compound contained in the first layer 110, the orientation direction of the molecules of the liquid crystal compound contained in the second layer 120, and the orientation direction of the molecules of the liquid crystal compound contained in the third layer 130 are usually parallel. Therefore, usually the liquid crystal cured layer 100 may be an optically anisotropic layer in which, when the liquid crystal cured layer 100 is viewed from the thickness direction, the in-plane slow axis is parallel to the orientation directions of the molecules of the liquid crystal compound.

In the liquid crystal cured layer 100, it is preferable that occurrence of orientation defects is suppressed. Therefore, the number of orientation defects in the liquid crystal cured layer 100 is preferably small. Specifically, the number of orientation defects per $mm^2$ is preferably less than 10 streaks, more preferably less than 1 streak. Since the liquid crystal cured film 10 including such a liquid crystal cured layer 100 is excellent in the uniformity of in-plane optical properties, it can be used as a high-quality optical film.

The number of orientation defects of the liquid crystal cured layer 100 may be measured by transmissively observing the liquid crystal cured layer 100 under crossed Nicols through a polarization microscope.

The thickness of the liquid crystal cured layer 100 may be appropriately set such that properties such as a retardation fall within a desired range. Specifically, the thickness of the liquid crystal cured layer 100 is preferably 0.5 μm or more, and more preferably 1.0 μm or more, and is preferably 10 μm or less, and more preferably 7 μm or less.

Examples of an optional layer which may be included in the liquid crystal cured film 10 in combination with the liquid crystal cured layer 100 may include: a substrate used in the production of the liquid crystal cured layer 100; a phase difference film; a polarizing film as a liner polarizer; an adhesive layer for bonding with another member; a mat layer for improving the sliding properties of a film; a hardcoat layer such as an impact resistant polymethacrylate resin layer; an antireflective layer; and an antifouling layer.

Since the liquid crystal cured layer 100 included in the liquid crystal cured film 10 has a specific structure in which the tilt angles of the molecules of the liquid crystal compound are discontinuously different in the thickness direction, it can have optical properties corresponding to the specific structure. Therefore, the use of the liquid crystal cured film 10 enables a variety of optical designs, and flexibility of optical designs can thereby be enhanced. Furthermore, since the liquid crystal cured film 10 does not need to include an adhesive layer, which is different from an optical film obtained by bonding separately produced liquid crystal cured layers, it can be thinner than the prior art films.

[10. Use applications]

The liquid crystal cured film may be suitably used as, for example, an optical film such as a phase difference film, an optical compensation film, a linear polarizing plate, and a circular polarizing plate.

[Examples]

Hereinafter, the present invention will be specifically described with reference to Examples. However, the present invention is not limited to Examples described below. The present invention may be freely modified and practiced without departing from the scope of claims of the present invention and the scope of their equivalents. Unless otherwise specified, "%" and "part(s)" that represent an amount in the following description are on the basis of weight. Unless otherwise specified, operations described below were performed under conditions of normal temperature and normal pressure in atmospheric air.

[Description of liquid crystal compound]

The structures of the liquid crystal compounds used in Examples and Comparative Examples described later are as follows.

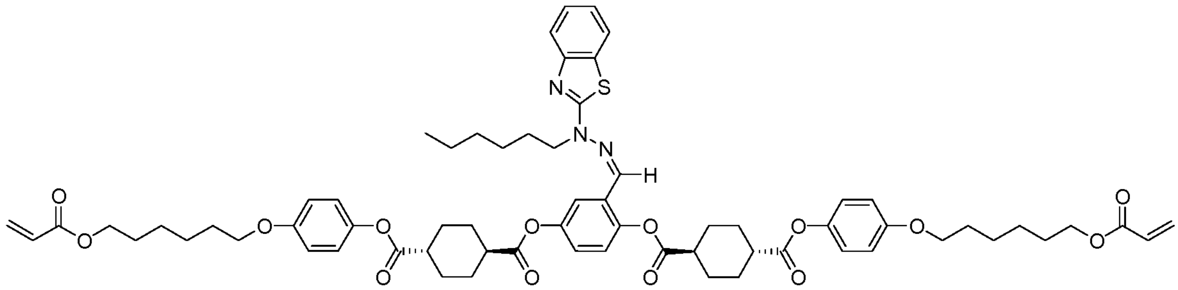

Reverse distribution liquid crystal compound 1

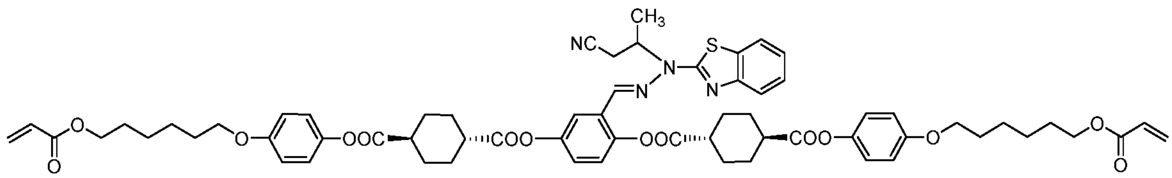

Reverse distribution liquid crystal compound 2

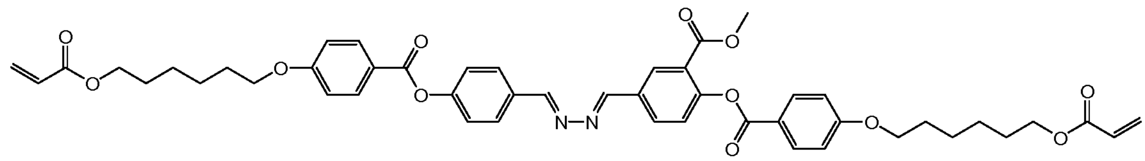

Forward distribution liquid crystal compound K35

[Evaluation method]

(1. Method for measuring logP of fluorine-based surfactant)

(1-1. Method for preparing sample solution containing fluorine-based surfactant)

A sample solution containing 1% by weight of a fluorine-based surfactant was prepared. As a solvent of this sample solution, tetrahydrofuran or acetonitrile was used. When the fluorine-based surfactant before mixing with tetrahydrofuran or acetonitrile was a solution containing the fluorine-based surfactant and a dilution solvent, the amount of tetrahydrofuran or acetonitrile was adjusted such that the containing amount of the fluorine-based surfactant included in the obtained sample solution became 1% by weight.

(1-2. HPLC/ELSD analysis)

The aforementioned sample solution containing the fluorine-based surfactant was subjected to HPLC/ELSD analysis approximately in accordance with JIS 7260-117:2006 {Measurement of partition coefficient (1-octanol/water)-high performance liquid chromatography} under the following HPLC/ELSD analysis condition to measure elution time (r.t.).

· HPLC/ELSD analysis condition

LC system: LC-20A (manufactured by Shimadzu Corporation)
Column: Inertsil ODS-3 3.0 × 150 mm, 5 μm (manufactured by GL Sciences Inc.)
Mobile phase: A, water
B, acetonitrile/tetrahydrofuran = 8/2 (vol/vol) Acetonitrile: for use in high performance liquid chromatography (Kokusan Chemical Co., Ltd.)
Tetrahydrofuran: inhibitor-free, for HPLC (manufactured by Sigma-Aldrich Co.)
Time program: 0 to 15 min, B 30% to 100%
15 to 25 min, B 100%

Column temperature: 45°C
Flow rate: 0.8 mL/min
Injection volume: 10 μL (adjusted to 50 or 100 μL when detection sensitivity of the sample is low)
Detection: ELSD-LTII (Shimadzu Corporation), Gain 6, 350kPa, 65°C

(1-3. Derivation of calibration curve)

Standard compounds illustrated in the following Table 1 were prepared. The standard compounds illustrated in Table 1 are compounds having a known logP described in JIS 7260-117:2006. Except that this standard compound was used instead of the fluorine-based surfactant, the same operation as the aforementioned method (1-1. Method for preparing sample solution containing fluorine-based surfactant) was performed to prepare a sample solution containing each standard compound. After that, the obtained sample solution was subjected to HPLC/ELSD analysis under the analysis condition described in the aforementioned (1-2. HPLC/ELSD analysis) to measure elution time. The temperature of the ELSD detector was set to 25°C.

[Table 1. Standard compounds and analysis results thereof]

| Standard compound | CAS | log P | Boiling point | Elution time | Injection volume |
|---|---|---|---|---|---|
| Triphenylamine (manufactured by Kanto Chemical Co., Inc., Cica special grade) | 603-34-9 | 5.7 | 348°C | 16.0min | 10μL |
| Phenanthrene (manufactured by Kanto Chemical Co., Inc., Cica first grade) | 1985/1/8 | 4.5 | 375°C | 13.6min | 50μL |
| Benzyl benzoate (manufactured by Kanto Chemical Co., Inc., Cica special grade) | 120-51-4 | 4.0 | 323°C | 12.4min | 10μL |
| Acetanilide (manufactured by Kanto Chemical Co., Inc., Cica first grade) | 103-84-4 | 1.0 | 184°C | 3.0min | 10μL |

The analysis results of the aforementioned standard compounds were plotted on a coordinate system with the elution time at the horizontal axis and the logP at the vertical axis, and an approximate straight line was created by the least square method. This approximate straight line was adopted as a calibration curve.

(1-4. Calculation of logP of fluorine-based surfactant)

The elution time measured for each fluorine-based surfactant was fitted to the aforementioned calibration curve to thereby obtain the logP of the fluorine-based surfactant. When a plurality of peaks exhibiting the elution time was detected for one fluorine-based surfactant in the HPLC/ELSD analysis, the peak top of the peak having the largest area was adopted as the elution time of the fluorine-based surfactant for calculating the logP.

(2. Method for measuring residue content viscosity of test composition under a condition of a temperature that is the same as the temperature of the layer of the liquid crystal composition during orientation treatment)

There was prepared a test composition having a constituent composition obtained by omitting the polymerization initiator from the liquid crystal composition to be used in each of Examples and Comparative Examples described later. This test composition was concentrated under reduced pressure by a rotary evaporator to remove the solvent. Thus, a residual component was obtained. The viscosity of the obtained residual component of each test composition was measured while the measurement temperature was changed. Thus, the "temperature-viscosity information" was recorded. This viscosity measurement was performed by charging 0.3 g of the residual component of the test composition in a measuring container, and using an electromagnetically spinning EMS viscometer ("EMS-1000" manufactured by Kyoto Electronics Manufacturing Co., Ltd.) under the measurement condition of a spherical probe diameter of 2 mm and a rotational speed of 1000 rpm while the measurement temperature was changed within 96 to 200°C.
In the oven used in each of Examples and Comparative Examples described later, the set temperature of the oven and the temperature of the layer of the liquid crystal composition placed in the oven are not necessarily the same. Therefore, the temperature of the layer of the liquid crystal composition placed in the oven was previously measured at each of a variety of set temperatures, and "set temperature-layer temperature information" was obtained.
In Examples and Comparative Examples described later, the temperature of the layer of the liquid crystal

composition corresponding to the set temperature of the oven during the orientation treatment was read from the aforementioned "set temperature-layer temperature information". Then, the viscosity of the residual component of the test composition corresponding to the read temperature of the layer of the liquid crystal composition was read from the aforementioned "temperature-viscosity information". The read viscosity was obtained as the residue content viscosity of the test composition under the condition of the temperature that is the same as the temperature of the layer of the liquid crystal composition during the orientation treatment.

(3. Method for measuring tilt angles of molecules of liquid crystal compound in each layer contained in liquid crystal cured layer)

The liquid crystal cured film including a liquid crystal cured layer and a substrate film was embedded in an epoxy resin to prepare a sample piece. This sample piece was sliced in parallel to the thickness direction of the liquid crystal cured layer using a microtome to obtain an observation sample. The slicing was performed such that the in-plane slow axis direction of the liquid crystal cured layer and the cross section became parallel. After that, the observation sample was placed on a stage of a polarization microscope, and a cross section having appeared by slicing was observed while the stage was rotated. From the rotation angles of the stage at extinction positions for the first layer, the second layer, and the third layer of the liquid crystal cured layer having appeared on the cross section, the tilt angles of the molecules of the liquid crystal compound contained in the first layer, the second layer, and the third layer were measured, respectively.

(4. Method for measuring thickness of each layer contained in liquid crystal cured layer)

The liquid crystal cured film including a liquid crystal cured layer and a substrate film was embedded in an epoxy resin to prepare a sample piece. This sample piece was sliced in parallel to the thickness direction of the liquid crystal cured layer using a microtome to obtain an observation sample. The slicing was performed such that the in-plane slow axis direction of the liquid crystal cured layer and the cross section became parallel. After that, a cross section having appeared by slicing was observed through a polarization microscope to measure the thickness of each of the first layer, the second layer, and the third layer.

(5. Method for checking if tilt angle of molecules of liquid crystal compound in each layer included in liquid crystal cured layer is constant)

The liquid crystal cured film including a liquid crystal cured layer and a substrate film was embedded in an epoxy resin to prepare a sample piece. This sample piece was sliced in parallel to the thickness direction of the liquid crystal cured layer using a microtome to obtain an observation sample. The slicing was performed such that the in-plane slow axis direction of the liquid crystal cured layer and the cross section became parallel. After that, a cross section having appeared by slicing was observed through a polarization microscope. This observation was performed by inserting a wave plate between the observation sample and the objective lens of the polarization microscope to observe an image which exhibits a color corresponding to the retardation of the observation sample. When the observed color of the first layer was identical at every position in the first layer, it was determined that the tilt angle of the molecules of the liquid crystal compound contained in the first layer was constant. When the observed color of the second layer was identical at every position in the second layer, it was determined that the tilt angle of the molecules of the liquid crystal compound contained in the second layer was constant. Furthermore, when the observed color of the third layer was identical at every position in the third layer, it was determined that the tilt angle of the molecules of the liquid crystal compound contained in the third layer was constant.

(6. Method for evaluating reverse wavelength distribution property)

Using a phase difference meter ("AxoScan" manufactured by Axometrics Inc.), retardations Re(450) and Re(550) on the front (incident angle 0°) at a wavelength of 450 nm and 550 nm were measured for the liquid crystal cured layer of the evaluation multilayer body. From the measured values of the retardations Re(450) and Re(550), the reverse wavelength distribution property of the liquid crystal cured layer was evaluated in accordance with the following criteria.

A: Re(450)/Re(550) < 1.0
B: Re(450)/Re(550) ≥ 1.0

(7. Method for evaluating orientation defects of liquid crystal cured layer)

The liquid crystal cured layer of the evaluation multilayer body was transmissively observed under crossed Nicols through a polarization microscope. In this observation, the objective lens was set to a magnification of 20 times. From the observation result, the orientation defects of the liquid crystal cured layer were evaluated in accordance with the following criteria.

A: The number of orientation defects is less than 1 streak/$mm^2$.
B: The number of orientation defects is not less than 1 streak/$mm^2$ to less than 10 streaks/$mm^2$.
C: The number of orientation defects is not less than 10 streaks/$mm^2$.

(8. Method for evaluating tilt orientation properties of liquid crystal cured layer)

Using a phase difference meter ("AxoScan" manufactured by Axometrics Inc.), the retardation of the liquid crystal cured layer of the evaluation multilayer body was measured within the incidence angle range of -50° to 50°. From the measured retardations, the average tilt angle for the molecules of the liquid crystal compound contained in the liquid crystal cured layer was analyzed by an analysis software (analysis software "Multi-Layer Analysis" manufactured by AxoMetrics Inc., analysis conditions: analysis wavelength 590 nm, number of divided layers 20 (divided at about every 0.1 μm)) attached to the phase difference meter. The average tilt angle represents the maximum value of the tilt angles of the molecules of the liquid crystal compound on the basis of the assumption that the tilt angles of the molecules on a surface at the side of the first layer of the liquid crystal cured layer is 0°, and the tilt angles of the molecules change at a constant ratio in the thickness direction. This average tilt angle is a representative value that represents the size of an angle formed by the entirety of the molecules of the liquid crystal compound contained in the liquid crystal cured layer relative to the layer plane. In general, when this average tilt angle is larger, it can be evaluated that the entirety of the molecules of the liquid crystal compound contained in the liquid crystal cured layer forms a larger tilt angle relative to the layer plane. On the basis of the measured average tilt angle, the tilt orientation properties of the liquid crystal cured layer were evaluated in accordance with the following criteria.

A: Average tilt angle is not less than 10°.
B: Average tilt angle is less than 10°.

[Examples 1 to 11 and Comparative Examples 1 and 2]

(Preparation of liquid crystal composition)

There were mixed a reverse distribution liquid crystal compound having polymerizability, a forward distribution liquid crystal compound K35 as an optional additive, 0.15 part by weight of a fluorine-based surfactant, 4.3 parts by weight of a photopolymerization initiator ("Irgacure OXE04" manufactured by BASF), 148.5 parts by weight of cyclopentanone as a solvent, and 222.8 parts by weight of 1.3-dioxolane as a solvent. Thus, a liquid crystal composition was obtained. The type and amount of the reverse distribution liquid crystal compound, the amount of the forward distribution liquid crystal compound K35, and the type of the fluorine-based surfactant were as illustrated in Table 2.

(Preparation of substrate film)

As the substrate film, there was prepared a resin film ("ZEONOR Film ZF16" manufactured by ZEON Corporation; thickness 100 μm) formed of thermoplastic norbornene resin, to one surface of which a masking film was bonded. The masking film was peeled from this substrate film, and the masking peeled surface was subjected to a corona treatment. Subsequently, the corona treated surface of the substrate film was subjected to a rubbing treatment.

(Formation of layer of liquid crystal composition)

The rubbing treated surface of the substrate film was coated with the liquid crystal composition using a #6 wire bar to form a layer of the liquid crystal composition.

(Orientation treatment)

After that, the layer of the liquid crystal composition was heated in an oven at a set temperature of 110 to 170°C for 4 minutes to perform an orientation treatment. In this heating, the specific set temperature of the oven was set such

that the temperature of the layer of the liquid crystal composition in the oven became the same as a temperature at which the residue content viscosity of the test composition becomes the value indicated in Table 2. Accordingly, the solvent was evaporated, and the liquid crystal compound contained in the layer of the liquid crystal composition was oriented.

(Curing treatment)

The orientation treated layer of the liquid crystal composition was irradiated with ultraviolet rays at 500 $mJ/cm^2$ under nitrogen atmosphere to cure the layer of the liquid crystal composition. Accordingly, a liquid crystal cured layer having a thickness of 2 μm was formed. Thus, a liquid crystal cured film having the layer structure of liquid crystal cured layer / substrate film was obtained.

(Transfer of liquid crystal cured layer onto glass slide)

To a glass slide onto which a tackiness agent had been applied, the liquid crystal cured film was bonded at its surface on the liquid crystal cured layer side. After that, the substrate film was peeled. Accordingly, an evaluation multilayer body having the layer structure of liquid crystal cured layer / tackiness layer / glass slide was obtained.
The obtained multilayer body was used to evaluate the reverse wavelength distribution property, orientation defects, and tilt orientation properties of the liquid crystal cured layer.
Especially in Example 4, the liquid crystal cured film was used to evaluate the tilt angles of the molecules of the liquid crystal compound contained in the first layer, the second layer, and the third layer included in the liquid crystal cured layer and the thicknesses.

[Results]

Table 2 shows: the type and amount of the reverse distribution liquid crystal compound; the amount of the forward distribution liquid crystal compound K35; the type of the fluorine-based surfactant; and the residue content viscosity of the test composition under the condition of the temperature that is the same as the temperature of the layer of the liquid crystal composition during the orientation treatment, for each of Examples and Comparative Examples. Table 3 shows the evaluation results for the reverse wavelength distribution property and tilt orientation properties of the liquid crystal cured layer. Furthermore, Table 4 shows the results for the tilt angles of the molecules of the liquid crystal compound contained in the first layer, the second layer, and the third layer, and the thicknesses thereof, which were measured in Example 4.
Herein, in all of Examples, the tilt angle in each of the first layer, the second layer, and the third layer included in the liquid crystal cured layer was constant, and the first tilt angle, the second tilt angle, and the third tilt angle were discontinuously different. On the other hand, in Comparative Example 1, the average tilt angle was less than 10°, and boundaries among the first layer, the second layer, and the third layer included in the liquid crystal cured layer were unclear. Therefore, in Comparative Example 1, it could not be confirmed that the tilt angles of the molecules of the liquid crystal compound were discontinuously different in the thickness direction.
FIG. 2 shows a photograph of the cross section of the liquid crystal cured layer observed through a polarization microscope, especially in Example 4. Furthermore, FIG. 3 shows an illustrative drawing for explaining each portion of FIG. 2. In FIG. 3, reference numeral "210" indicates a substrate film, "220" a liquid crystal cured layer, "221" a first layer, "222" a second layer, "223" a third layer, and 230 an epoxy resin.
Furthermore, the evaluation results for orientation defects were "A" in Examples 1 to 5, and "B" in Example 6.
In the following Tables, meanings of the abbreviations are as follows.

Reverse distribution 1: reverse distribution liquid crystal compound 1
Reverse distribution 2: reverse distribution liquid crystal compound 2
K35: forward distribution liquid crystal compound K35
F-based surfactant: fluorine-based surfactant
S420: fluorine-based surfactant "S420" manufactured by AGC Seimi Chemical Co., Ltd.
F444: fluorine-based surfactant "Megaface F-444" manufactured by DIC Corporation
215M: fluorine-based surfactant "Ftergent FTX-215M" manufactured by Neos corporation
212M: fluorine-based surfactant "Ftergent FTX-212M" manufactured by Neos corporation
251: fluorine-based surfactant "Ftergent 251" manufactured by Neos corporation
FTX209: fluorine-based surfactant "Ftergent FTX-209" manufactured by Neos corporation

[Table 2. Constituent composition and residue content viscosity of liquid crystal compositions of Examples and Comparative Examples]

| | Reverse distribution liquid crystal compound | | Optional additive | | F-based surfactant | | Residue content viscosity (cP) |
|---|---|---|---|---|---|---|---|
| | Type | Amount (parts) | Type | Amount (parts) | Type | LogP | |
| Ex. | | | | | | | |
| 1 | Reverse distribution 1 | 100 | - | - | FTX209 | 6.3 | 140 |
| 2 | Reverse distribution 1 | 100 | - | - | S420 | 5.3 | 532 |
| 3 | Reverse distribution 1 | 100 | - | - | S420 | 5.3 | 255 |
| 4 | Reverse distribution 1 | 100 | - | - | S420 | 5.3 | 140 |
| 5 | Reverse distribution 1 | 90 | K35 | 10 | S420 | 5.3 | 763 |
| 6 | Reverse distribution 1 | 100 | - | - | 251 | 4.8 | 140 |
| 7 | Reverse distribution 1 | 100 | - | - | 212M | 4.7 | 140 |
| 8 | Reverse distribution 1 | 100 | - | - | 215M | 4.6 | 140 |
| 9 | Reverse distribution 1 | 100 | - | - | F444 | 3.9 | 140 |
| 10 | Reverse distribution 2 | 100 | - | - | S420 | 5.3 | 209 |
| 11 | Reverse distribution 2 | 100 | - | - | S420 | 5.3 | 496 |
| Comp. Ex | | | | | | | |
| 1 | Reverse distribution 1 | 100 | - | - | S420 | 5.3 | 846 |
| 2 | Reverse distribution 2 | 100 | - | - | S420 | 5.3 | 889 |

[Table 3. Results of Examples and Comparative Examples]

| | Reverse distribution property | Tilt orientation properties | |
|---|---|---|---|
| | | Average tilt angle (°) | Evaluation |
| Ex. | | | |
| 1 | A | 33 | A |
| 2 | A | 28 | A |
| 3 | A | 33 | A |
| 4 | A | 35 | A |

(continued)

| | Reverse distribution property | Tilt orientation properties | |
|---|---|---|---|
| | | Average tilt angle (°) | Evaluation |
| Ex. | | | |
| 5 | A | 24 | A |
| 6 | A | 11 | A |
| 7 | A | 11 | A |
| 8 | A | 11 | A |
| 9 | A | 19 | A |
| 10 | A | 36 | A |
| 11 | A | 21 | A |
| Comp. Ex. | | | |
| 1 | A | 9 | B Layer boundaries unclear |
| 2 | A | 0 | B |

[Table 4. Tilt angles and thicknesses in Example 4]

| Ex. 4 | Tilt angle (°) | Thickness (μm) |
|---|---|---|
| First layer | 0 | 0.6 |
| Second layer | 44 | 0.8 |
| Third layer | 90 | 0.6 |

Reference Sign List

10 liquid crystal cured film
100 liquid crystal cured layer
110 first layer
120 second layer
130 third layer

## Claims

**1.** A method for producing a liquid crystal cured film including a liquid crystal cured layer formed of a cured product of a liquid crystal composition including a liquid crystal compound capable of expressing a birefringence with reverse wavelength distribution and a polymerization initiator, the method comprising:

a step of forming a layer of the liquid crystal composition;
a step of giving orientation to the liquid crystal compound contained in the layer of the liquid crystal composition; and
a step of curing the layer of the liquid crystal composition, wherein
a residue content viscosity of a test composition is 800 cP or less under a condition of a temperature that is the same as a temperature of the layer in the step of giving orientation to the liquid crystal compound, the test composition being the liquid crystal composition from which the polymerization initiator is omitted.

**2.** The method for producing a liquid crystal cured film according to claim 1, wherein the liquid crystal composition includes a surfactant containing a fluorine atom.

3. The method for producing a liquid crystal cured film according to claim 2, wherein a 1-octanol/water partition coefficient of the surfactant is 3.5 or more and 6.7 or less.

4. The method for producing a liquid crystal cured film according to claim 2 or 3, wherein an amount of the surfactant relative to 100 parts by weight of the liquid crystal compound is 0.10 part by weight or more and 0.50 part by weight or less.

5. A liquid crystal cured film comprising a liquid crystal cured layer formed of a cured product of a liquid crystal composition including a liquid crystal compound capable of expressing a birefringence with reverse wavelength distribution,
the liquid crystal cured layer includes a first layer, a second layer, and a third layer which are disposed in this order and contain the liquid crystal compound which may be in a fixed orientation state,
first tilt angle formed by molecules of the liquid crystal compound contained in the first layer relative to a layer plane is constant in the first layer,
second tilt angle formed by molecules of the liquid crystal compound contained in the second layer relative to a layer plane is constant in the second layer,
the second tilt angle is discontinuously different from the first tilt angle,
third tilt angle formed by molecules of the liquid crystal compound contained in the third layer relative to a layer plane is constant in the third layer, and
the third tilt angle is discontinuously different from the first tilt angle and the second tilt angle.

6. The liquid crystal cured film according to claim 5, wherein
a ratio in thickness of the first layer relative to a total thickness 100% of the first layer, the second layer, and the third layer is 14% or more and 66% or less,
a ratio in thickness of the second layer relative to the total thickness 100% of the first layer, the second layer, and the third layer is 1% or more and 80% or less, and
a ratio in thickness of the third layer relative to the total thickness 100% of the first layer, the second layer, and the third layer is 6% or more and 33% or less.

7. The liquid crystal cured film according to claim 5 or 6, wherein
the first tilt angle is 0° or more and 20° or less,
the second tilt angle is 20° or more and 70° or less, and
the third tilt angle is 70° or more and 90° or less.

FIG.1

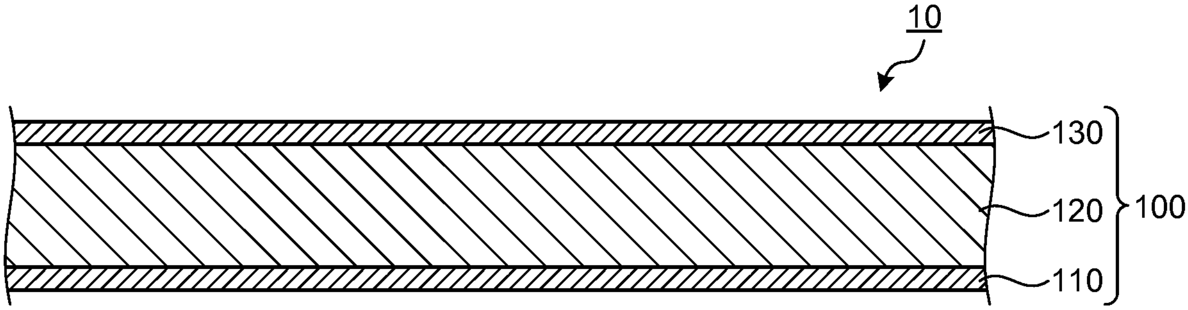


FIG.2

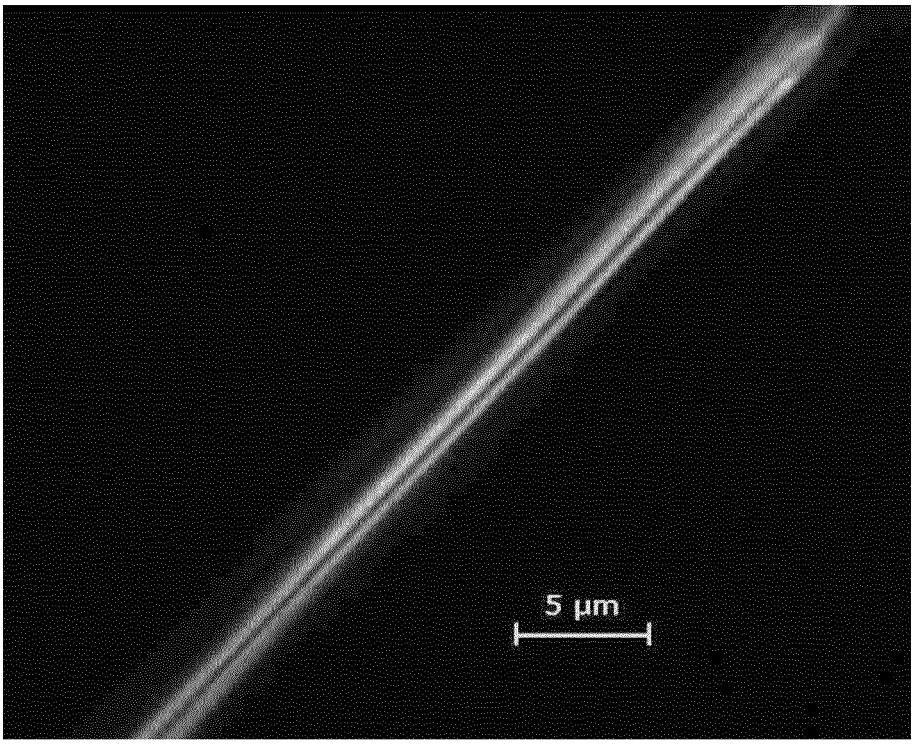

FIG.3

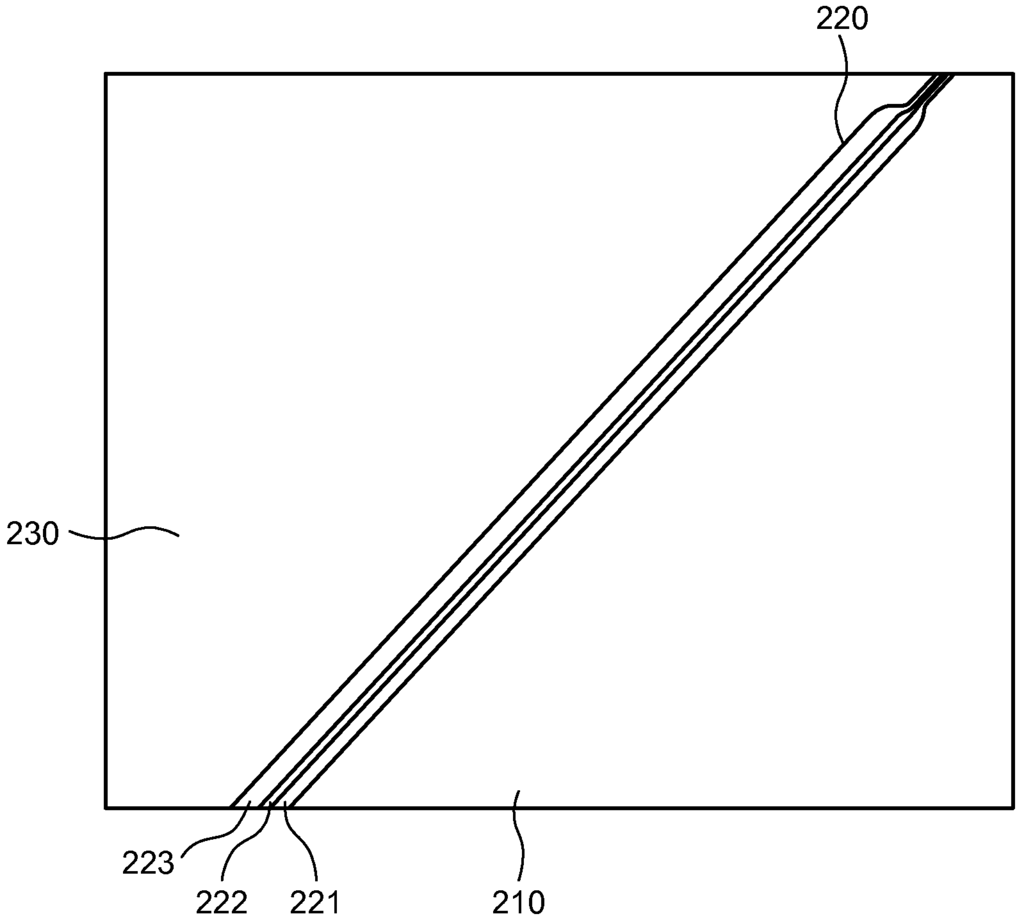

**INTERNATIONAL SEARCH REPORT**

International application No.
PCT/JP2018/009006

A. CLASSIFICATION OF SUBJECT MATTER
Int.Cl. G02B5/30(2006.01)i

According to International Patent Classification (IPC) or to both national classification and IPC

B. FIELDS SEARCHED

Minimum documentation searched (classification system followed by classification symbols)
Int.Cl. G02B5/30, C08F220/38, C09K19/38, C09K19/54

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-102205 A (FUJIFILM CORP.) 19 April 2007, paragraphs [0037], [0158]-[0160], [0196]-[0201], table 2 & US 2008/0113112 A1, paragraphs [0064]-[0065], [0177]-[0181], [0228]-[0234], table 2 & WO 2007/029771 A1 & CN 101258433 A & TW 200717044 A | 1-4 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 May 2018 (18.05.2018) | 29 May 2018 (29.05.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2018/009006

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-196117 A (LG. PHILLIPS LCD CO., LTD.) 21 July 2005, paragraphs [0028]-[0033], [0038]-[0045], fig. 4-5 & US 2005/0140880 A1, paragraphs [0059]-[0064], [0069]-[0078], fig. 4-5 & DE 102004031440 A1 & KR 10-2005-0070616 A & CN 1637502 A | 5-7 |
| Y | JP 2009-062508 A (FUJIFILM CORP.) 26 March 2009, paragraphs [0002], [0088]-[0096] (Family: none) | 5-7 |
| A | JP 2000-249835 A (FUJIFILM CORP.) 14 September 2000, paragraphs [0016], [0027], [0031], [0057], [0115]-[0119], fig. 3 (Family: none) | 1-7 |
| A | JP 2007-264259 A (FUJIFILM CORP.) 11 October 2007, entire text & US 2007/0231506 A1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5363022 B
- JP 2015161714 A
- JP 2016110153 A
- JP 2005336103 A
- WO 2009042544 A


### Non-patent literature cited in the description


- Yuki Gosei Jikkenhou Handbook (Organic synthesis experimental method handbook). Maruzen Co., Ltd, 1990, 810
- Shin Jikken Kagaku Koza (New course of experimental chemistry). Maruzen Co., Ltd, 1978, vol. 14
- Jikken Kagaku Koza (Course of experimental chemistry). Maruzen Co., Ltd, 1992, vol. 20
- *The Journal of Organic Chemistry,* 2011, vol. 76, 8082-8087
- *CHEMICAL ABSTRACTS,* 603-34-9, 1985/1/8, 120-51-4, 103-84-4